(19) Europäisches Patentamt
European Patent Office
Office européen des brevets

(11) **EP 4 730 860 A1**

(12) **EUROPEAN PATENT APPLICATION**
published in accordance with Art. 153(4) EPC

(43) Date of publication:
**22.04.2026 Bulletin 2026/17**

(51) International Patent Classification (IPC):
***H04W 24/08*** (2009.01)

(21) Application number: **24822534.4**

(52) Cooperative Patent Classification (CPC):
**H04B 17/10; H04B 17/327; H04B 17/382;**
**H04L 5/00; H04W 24/08**

(22) Date of filing: **28.05.2024**

(86) International application number:
**PCT/CN2024/095696**

(87) International publication number:
**WO 2024/255582 (19.12.2024 Gazette 2024/51)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **16.06.2023 CN 202310716651**

(71) Applicant: **Datang Mobile Communications**
**Equipment Co., Ltd.**
**Beijing 100085 (CN)**

(72) Inventor: **WANG, Junwei**
**Beijing 100085 (CN)**

(74) Representative: **dompatent**
**Partnerschaft von**
**Patentanwälten und Rechtsanwälten mbB**
**Deichmannhaus am Dom**
**Bahnhofsvorplatz 1**
**50667 Köln (DE)**

(54) **SIGNAL PROCESSING METHOD AND APPARATUS, AND TERMINAL**

(57) Provided are a signal processing method and apparatus, and a terminal, which relate to the field of communication sensing technology. The method includes: determining, by a terminal, a first target received power value of a sensing signal; determining, by the terminal, a first transmission power value of the sensing signal based on the first target received power value; determining, by the terminal, a first radio resource based on the first transmission power value; and transmitting and/or receiving, by the terminal, the sensing signal on the first radio resource.

FIG. 3

**Description**

**CROSS-REFERENCE TO RELATED APPLICATION**

The present disclosure claims a priority of Chinese Patent Application No. 202310716651.X entitled "SIGNAL PROCESSING METHOD AND APPARATUS, AND TERMINAL" filed on June 16, 2023, the entire contents of which are hereby incorporated by reference in their entirety.

**TECHNICAL FIELD**

The present disclosure relates to the field of communication sensing technology, particularly to a signal processing method and apparatus, and a terminal.

**BACKGROUND**

In the evolution of communication technologies, Integrated Sensing and Communication (Integrated Sensing and Communication, ISAC) is a key candidate feature for advancement. In a sensing process, a sensing device may actively transmit a sensing signal and perform environmental sensing based on a reflected signal, or a sensing device may conduct environmental sensing by receiving a sensing signal or an echo signal. When transmitting a sensing signal, consideration must be given to a transmission power and a transmission resource (here, "transmission" includes transmitting and/or receiving, and the transmission resource includes a time-domain resource and/or a frequency-domain resource) of the signal. Theoretically, a higher transmission power of the sensing signal can improve precision and accuracy of a sensing result, whereas a lower power leads to reduced precision and accuracy. However, the higher transmission power also results in greater interference with other communication devices, which is detrimental to over-the-air coexistence between devices. Taking a terminal as an example of a sensing device, when a radio resource for transmitting the sensing signal is shared with a network device (such as a base station), the base station allocates all radio resource positions for the sensing signal, which can minimize the mutual interference of signals between devices. Nevertheless, the process of applying for and allocating sensing resources requires signaling interaction between the base station and the terminal, which consumes additional radio resources and increases the latency of sensing services.

**SUMMARY**

The present disclosure provides a signal processing method and apparatus, and a terminal, to solve a problem of high resource consumption and high latency in current sensing signal transmission.

An embodiment of the present disclosure provides a signal processing method, including:

determining, by a terminal, a first target received power value of a sensing signal;
determining, by the terminal, a first transmission power value of the sensing signal based on the first target received power value;
determining, by the terminal, a first radio resource based on the first transmission power value; and
transmitting and/or receiving, by the terminal, the sensing signal on the first radio resource.

Optionally, the first target received power value is an expected target power value for receiving the sensing signal; and the first target received power value is configured by a network device side or defined by a protocol.

Optionally, the determining, by the terminal, the first transmission power value of the sensing signal based on the first target received power value includes:

determining, by the terminal, the first transmission power value based on the first target received power value and a first set, where the first set at least includes a path loss value of a first path and a first parameter value related to a frequency-domain resource occupied by the sensing signal; or
determining, by the terminal, the first transmission power value based on the first target received power value and a second set, where the second set at least includes: a path loss value of a first path,
where the first path is a path from a transmitter for the sensing signal to a first signal receiver, and the first signal receiver is an expected receiver for the sensing signal.

Optionally, the path loss value of the first path is less than or equal to a preset path loss value, and the preset path loss value is determined at least by a maximum sensing distance supported by a sensing service, a radar cross section (Radar Cross Section, RCS), and a transmission frequency band of the sensing signal.

Optionally, the determining, by the terminal, the first radio resource based on the first transmission power value includes:

determining, by the terminal, a second target received power value of the sensing signal;
determining, by the terminal, a second transmission power value of the sensing signal based on the second target received power value; and
determining, by the terminal, the first radio resource based on a magnitude relationship between the first transmission power value and the second transmission power value.

Optionally, the second target received power value is a power threshold at which the sensing signal causes interference; and the second target received power value is configured by a network device side or defined by a protocol.

Optionally, the determining, by the terminal, the second transmission power value of the sensing signal based on the second target received power value includes:

determining, by the terminal, the second transmission power value based on the second target received power value and a third set, where the third set at least includes a path loss value of a second path and a first parameter value related to a frequency-domain resource occupied by the sensing signal; or

determining, by the terminal, the second transmission power value based on the second target received power value and a fourth set, where the fourth set at least includes a path loss value of a second path, the first parameter value, and a first gain value; or

determining, by the terminal, the second transmission power value based on the second target received power value and a fifth set, where the fifth set at least includes the path loss value of the second path,

where the second path is a path from a transmitter for the sensing signal to a second signal receiver, and the second signal receiver is a receiver interfered by the sensing signal, and the first gain value is a gain value of a difference between a beam direction of a signal received by the terminal from the second signal receiver and a beam direction of the sensing signal received by the terminal.

Optionally, the path loss value of the second path is determined by a first reference signal, and the first reference signal includes at least one of the following:

a reference signal configured for a sensing service;
a reference signal used for determining a transmission power of a physical uplink control channel (PUCCH);
a reference signal used for determining a transmission power of a physical uplink shared channel (PUSCH); or
a synchronization signal block used for obtaining a master information block (MIB).

Optionally, the first gain value is determined by a formula: $g(\theta_d) = min \left\{ 12 \left( \frac{\theta_d}{\theta_{XdB}} \right), G_m \right\}$, where $g(\theta_d)$ is the first gain value, $\theta_{XdB}$ is an angle value corresponding to a gain attenuation of XdB, $G_m$ is a reference gain value, and $\theta_d$ is a difference between a beam direction of the signal received by the terminal from the second signal receiver and a beam direction of the sensing signal received by the terminal.

Optionally, the first parameter value is determined by a quantity of resource blocks (RBs) occupied by the sensing signal in a frequency domain; or the first parameter value is determined by the quantity of resource units (REs) occupied by the sensing signal in a frequency domain.

Optionally, the first parameter value being determined by the quantity of resource blocks (RBs) occupied by the sensing signal in the frequency domain includes: determining the first parameter value by a formula:

$$f(M_{RB}^{SS}) = 10 \log_2(2^\mu * M_{RB}^{SS})$$, where $f(M_{RB}^{SS})$ is the first parameter value, $\mu$ is a subcarrier spacing configuration parameter, and $M_{RB}^{SS}$ is the quantity of the RBs occupied by the sensing signal in the frequency domain.

Optionally, the first parameter value being determined by the quantity of resource units (RE) occupied by the sensing signal in the frequency domain includes: determining the first parameter value by a formula:

$$f(M_{RE}^{SS}) = 10 \log_2(2^\mu * \lceil M_{RE}^{SS}/12 \rceil)$$, where $f(M_{RE}^{SS})$ is the first parameter value, $\mu$ is the subcarrier spacing configuration parameter, and $M_{RE}^{SS}$ is the quantity of the REs occupied by the sensing signal in the frequency domain.

Optionally, the determining, by the terminal, the first radio resource based on the magnitude relationship between the first transmission power value and the second transmission power value includes:

determining, by the terminal, a radio resource obtaining mode based on the magnitude relationship between the first transmission power value and the second transmission power value; and
determining, by the terminal, the first radio resource based on the radio resource obtaining mode.

Optionally, the determining, by the terminal, the radio resource obtaining mode based on the magnitude relationship between the first transmission power value and the second transmission power value includes:

in a case where the first transmission power value is greater than or equal to the second transmission power value, determining, by the terminal, the radio resource obtaining mode as a first obtaining mode, where the first obtaining mode is that the network device indicates the first radio resource; and/or,
in a case where the first transmission power value is less than the second transmission power value, determining, by the terminal, the radio resource obtaining mode as a second obtaining mode, where second obtaining mode is that the terminal independently determines the first radio resource.

Optionally, the transmitting, by the terminal, the sensing signal on the first radio resource includes:

transmitting, by the terminal, the sensing signal on the first radio resource at the first transmission power value or the second transmission power value;
receiving, by the terminal, an echo signal reflected by the sensing signal;
adjusting, by the terminal, the first transmission power value or the second transmission power value based on a received power value of the echo signal; and
transmitting, by the terminal, the sensing signal on the first radio resource at the adjusted first transmission power value or the adjusted second transmission power value.

Optionally, the adjusting, by the terminal, the first transmission power value or the second transmission power value based on the received power value of the echo signal includes: adjusting, by the terminal, the first transmission power value or the second transmission power value according to a first step, in a case that a difference between the received power value of the echo signal and the first target received power value is within a first numerical range.

Optionally, the first numerical range is configured by a network device side; and the first step is a maximum or a minimum within the first numerical range.

An embodiment of the present disclosure provides a signal processing apparatus, including a memory, a transceiver, and a processor, where the memory is configured to store a computer program; the transceiver is configured to transmit and receive data under the control of the processor; and the processor is configured to read the computer program from the memory and perform the following operations:

determining a first target received power value of a sensing signal;
determining a first transmission power value of the sensing signal based on the first target received power value;
determining a first radio resource based on the first transmission power value; and
transmitting and/or receiving the sensing signal on the first radio resource.

Optionally, the first target received power value is an expected target power value for receiving the sensing signal; and the first target received power value is configured by a network device side or defined by a protocol.

Optionally, the processor is configured to read the computer program in the memory and perform the following operations:

determining the first transmission power value based on the first target received power value and a first set, where the first set at least includes a path loss value of a first path and a first parameter value related to a frequency-domain resource occupied by the sensing signal; or
determining the first transmission power value based on the first target received power value and a second set, where the second set at least includes: a path loss value of a first path,
where the first path is a path from a transmitter for the sensing signal to a first signal receiver, and the first signal receiver is an expected receiver for the sensing signal.

Optionally, the path loss value of the first path is less than or equal to a preset path loss value, and the preset path loss value is determined at least by a maximum sensing distance supported by a sensing service, a radar cross section (RCS), and a transmission frequency band of the sensing signal.

Optionally, the processor is configured to read the computer program from the memory and perform the following operations:

determining a second target received power value of the sensing signal;
determining a second transmission power value of the sensing signal based on the second target received power value; and
determining the first radio resource based on a magnitude relationship between the first transmission power value and the second transmission power value.

Optionally, the second target received power value is a power threshold at which the sensing signal causes interference; and the second target received power value is configured by a network device side or defined by a protocol.

Optionally, the processor is configured to read the computer program in the memory and perform the following operations:

determining the second transmission power value based on the second target received power value and a third set, where the third set at least includes a path loss value of a second path and a first parameter value related to a frequency-domain resource occupied by the sensing signal; or
determining the second transmission power value based on the second target received power value and a fourth set, where the fourth set at least includes a path loss value of a second path, the first parameter value, and a first gain value; or
determining the second transmission power value based on the second target received power value and a fifth set, where the fifth set at least includes the path loss value of the second path,
where the second path is a path from a transmitter for the sensing signal to a second signal receiver, and the second signal receiver is a receiver interfered by the sensing signal, and the first gain value is a gain value of a difference between a beam direction of a signal received by the terminal from the network device and a beam direction of the sensing signal received by the terminal.

Optionally, the path loss value of the second path is determined by a first reference signal, and the first reference signal includes at least one of the following:

a reference signal configured for a sensing service;
a reference signal used for determining a transmission power of a physical uplink control channel (PUCCH);
a reference signal used for determining a transmission power of a physical uplink shared channel (PUSCH); or
a synchronization signal block used for obtaining a master information block (MIB).

Optionally, the first gain value is determined by a formula: $g(\theta_d) = min\left\{12\left(\frac{\theta_d}{\theta_{XdB}}\right), G_m\right\}$, , where $g$ $(\theta_d)$ is the first gain value, $\theta_{XdB}$ is an angle value corresponding to a gain attenuation of XdB, $G_m$ is a reference gain value, and $\theta_d$ is a difference between a beam direction of the signal received by the terminal from a network device and a beam direction of the sensing signal received by the terminal.

Optionally, the first parameter value is determined by a quantity of resource blocks (RBs) occupied by the sensing signal in the frequency domain; or the first parameter value is determined by the quantity of resource units (REs) occupied by the sensing signal in the frequency domain.

Optionally, the first parameter value being determined by the quantity of resource blocks (RBs) occupied by the sensing signal in the frequency domain includes: determining the first parameter value by a formula:

$$f(M_{RB}^{SS}) = 10 \, log_2(2^\mu * M_{RB}^{SS})$$, where $f(M_{RB}^{SS})$ is the first parameter value, $\mu$ is a subcarrier spacing configuration parameter, and $M_{RB}^{SS}$ is the quantity of the RBs occupied by the sensing signal in the frequency domain.

Optionally, the first parameter value being determined by the quantity of resource units (RE) occupied by the sensing signal in the frequency domain includes: determining the first parameter value by a formula:

$$f(M_{RB}^{SS}) = 10 \, log_2(2^\mu * M_{RB}^{SS})$$, where $f(M_{RB}^{SS})$ is the first parameter value, $\mu$ is a subcarrier spacing configuration parameter, and $M_{RB}^{SS}$ is the quantity of the RBs occupied by the sensing signal in the frequency domain.

Optionally, the processor is configured to read the computer program from the memory and perform the following operations:

> determining a radio resource obtaining mode based on the magnitude relationship between the first transmission power value and the second transmission power value; and
> determining the first radio resource based on the radio resource obtaining mode.

Optionally, the processor is configured to read the computer program from the memory and perform the following operations:

> in a case where the first transmission power value is greater than or equal to the second transmission power value, determining the radio resource obtaining mode as a first obtaining mode, where the first obtaining mode is that the network device indicates the first radio resource; and/or,
> in a case where the first transmission power value is less than the second transmission power value, determining the radio resource obtaining mode as a second obtaining mode, where second obtaining mode is that the terminal independently determines the first radio resource.

Optionally, the processor is configured to read the computer program from the memory and perform the following operations:

> transmitting the sensing signal on the first radio resource at the first transmission power value or the second transmission power value;
> receiving an echo signal reflected by the sensing signal;
> adjusting the first transmission power value or the second transmission power value based on a received power value of the echo signal; and
> transmitting the sensing signal on the first radio resource at the adjusted first transmission power value or the adjusted second transmission power value.

Optionally, the processor is configured to read the computer program from the memory and perform the following operations:
adjusting the first transmission power value or the second transmission power value according to a first step, in a case that a difference between the received power value of the echo signal and the first target received power value is within a first numerical range.

Optionally, the first numerical range is configured by a network device side; and the first step is a maximum or a minimum within the first numerical range.

An embodiment of the present disclosure provides a terminal, including:

> a first processing unit, configured to determine a first target received power value of a sensing signal;
> a second processing unit, configured to determine a first transmission power value of the sensing signal based on the first target received power value;
> a third processing unit, configured to determine a first radio resource based on the first transmission power value; and
> a transceiver unit, configured to transmit and/or receive the sensing signal on the first radio resource.

An embodiment of the present disclosure provides a processor readable storage medium, storing a computer program, configured to cause the processor to execute steps of the signal processing method as described above.

The technical solutions of the present disclosure have the following beneficial effects. In the embodiments of the present disclosure, a terminal determines a first transmission power value for transmitting a sensing signal based on a first target received power value for receiving the sensing signal, and determines a first radio resource for transmitting and/or receiving the sensing signal based on the first transmission power value, to transmit and/or receive the sensing signal on the first radio resource. This can reduce the signaling overhead of allocating transmission and/or reception resources for the sensing signal by a network device, and can reduce the transmission delay of the sensing signal, thus solving a problem of high resource consumption and large delay in the current sensing signal transmission.

## BRIEF DESCRIPTION OF THE DRAWINGS

> FIG. 1a shows a schematic diagram of monostatic based on a base station;
> FIG. 1b shows a schematic diagram of monostatic based on a terminal;

FIG. 1c shows a schematic diagram of bistatic sensing from a terminal to another terminal;

FIG. 1d shows a schematic diagram of bistatic sensing from a base station to another base station;

FIG. 1e shows a schematic diagram of bistatic sensing from a terminal to a base station;

FIG. 1f shows a schematic diagram of bistatic sensing from a base station to a terminal;

FIG. 1g shows a schematic diagram of interactive sensing;

FIG. 2 shows a schematic diagram of a terminal determining powers for receiving and transmitting a sensing signal in a monostatic mode;

FIG. 3 shows a flow chart of a signal processing method according to an embodiment of the present disclosure;

FIG. 4 shows a schematic diagram of directions of a beam for a terminal receiving a signal from a second signal receiver and a beam for the terminal receiving a sensing signal according to an embodiment of the present disclosure;

FIG. 5a shows a schematic diagram of a power of a sensing signal reaching a network device exceeds a certain threshold according to an embodiment of the present disclosure;

FIG. 5b shows a schematic diagram of a power of a sensing signal reaching a network device below a certain threshold according to an embodiment of the present disclosure;

FIG. 6 shows a flow chart of a terminal transmitting a sensing signal on a first radio resource according to an embodiment of the present disclosure;

FIG. 7 shows a block diagram of a signal processing apparatus according to an embodiment of the present disclosure; and

FIG. 8 shows a block diagram of a terminal according to an embodiment of the present disclosure.

DETAILED DESCRIPTION

In order to make a to-be-solved technical problem, a technical solution and advantages of the present disclosure clearer, a detailed description will be given below in conjunction with the accompanying drawings and specific embodiments. In the following description, specific details such as specific configurations and components are provided merely to assist in a comprehensive understanding of the embodiments of the present disclosure. Therefore, those skilled in the art should be appreciated that various changes and modifications can be made to the embodiments described herein without departing from the scope and spirit of the present disclosure. In addition, for clarity and conciseness, descriptions of known functions and constructions have been omitted.

It should be appreciated that "an embodiment" or "one embodiment" mentioned throughout the specification means that specific features, structures, or characteristics related to the embodiment are included in at least one embodiment of the present disclosure. Therefore, words "in an embodiment" or "in one embodiment" appearing throughout the entire specification may not necessarily refer to the same embodiment. In addition, these specific features, structures, or characteristics may be combined in one or more embodiments in any suitable manner.

In various embodiments of the present disclosure, it should be appreciated that the size of a sequence number of each of the following processes does not imply the order of execution, and the execution order of each process should be determined based on the function and internal logic of the each process, which should not constitute any limitations on the implementation process of the present disclosure.

In addition, terms "system" and "network" are often used interchangeably in this specification.

The technical solution according to embodiments of the present disclosure may be applied to various systems, particularly to a 5th generation mobile communication technology (5th Generation Mobile Communication Technology, 5G) system. For example, an applicable system may be a global system of mobile communication (global system of mobile communication, GSM) system, a code division multiple access (code division multiple access, CDMA) system, a wideband code division multiple access (Wideband Code Division Multiple Access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, and a 5G New Radio (New Radio, NR) system. Each of the various systems includes a terminal and a network device. The systems may further include a core network portion, such as an evolved packet system (Evolved Packet System, EPS), a 5G system (5GS), or a 6G system.

The network device and the terminal may each perform multi-input multi-output (MIMO) transmission with each other by using one or more antennas. The MIMO transmission may be single user MIMO (SU-MIMO) or multiple user MIMO (MU-MIMO). According to the configuration and quantity of antenna combinations, the MIMO transmission may be 2 dimensional-MIMO (2D-MIMO), 3 dimensional-MIMO (3D-MIMO), full dimensional-MIMO (FD-MIMO) or massive-MIMO (massive-MIMO), and may be diversity transmission, pre-coded transmission, beam forming transmission, or the like.

The term "and/or" in the embodiments of the present disclosure describes an association relationship of associated objects, indicating that there may be three types of relationships. For example, A and/or B, which can represent three situations of A alone, both A and B, and B alone. The character "/" generally indicates that the associated objects before and after the character is in an "or" relationship.

The term "multiple" in the embodiments of the present disclosure refers to two or more, and other quantifiers are similar thereto.

The technical solution according to embodiments of the present disclosure will be clearly and completely described hereinafter in conjunction with the accompanying drawings. Apparently, the described embodiments merely relate to a part of, rather than all of, the embodiments of the present disclosure, and based on these embodiments, a person of ordinary skill in the art may obtain other embodiments without creative effort, which shall also fall within the scope of the present disclosure.

The following is a description of relevant technologies involved in this disclosure:

1. Basic Concepts Of ISAC

The fundamental concept of ISAC involves integrating wireless sensing capabilities into wireless mobile communications. Wireless sensing refers to the use of wireless signals to perceive environmental information, which includes but is not limited to: the distribution, the size, the quantity and the temperature of an object in the environment, human actions and behaviors, and even human respiratory rate, and heart rate, etc. The principle of wireless sensing is to transmit wireless signals to the environment that needs to be sensed, and collect the reflected, scattered, or multipath-transmitted wireless signals at the receiver. Since the collected wireless signals interact with the environment, they carry environmental information. Thus, by processing these reflected, scattered, or multipath-transmitted signals accordingly, environmental characteristics can be extracted, enabling the reconstruction of perceived environmental information. This includes identifying people and objects in the environment, detecting temperature, recognizing human movements, and even measuring respiratory and heart rates.

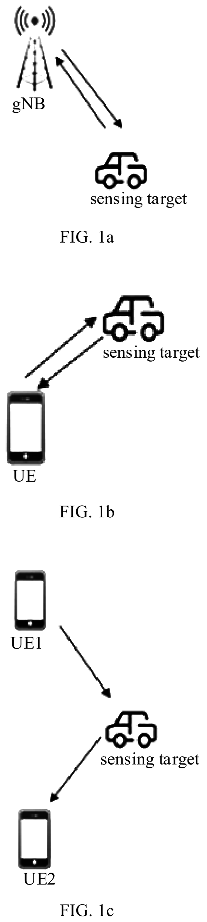

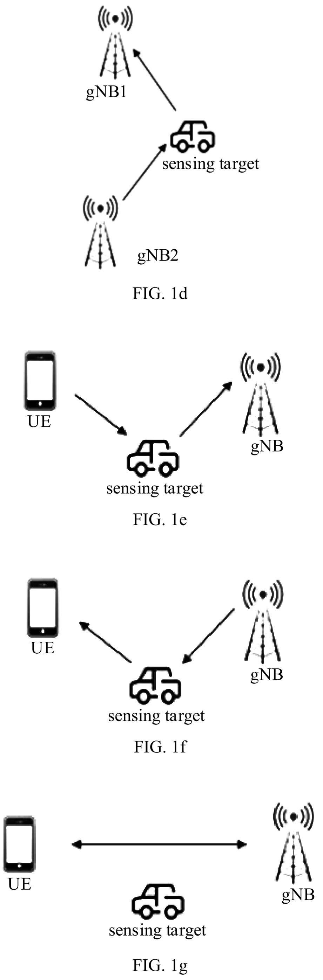

Wireless sensing is generally categorized into: monostatic sensing and bistatic sensing. Monostatic sensing refers to scenarios where a base station or a terminal actively transmits sensing signals, which are then reflected by a sensed object and received by the same base station or terminal. For example, monostatic sensing may include base station-based monostatic sensing (as shown in FIG. 1a) and terminal-based monostatic sensing (as shown in FIG. 1b). Bistatic sensing refers to scenarios where a base station or a terminal actively transmits sensing signals, which are then received by another terminal or another base station after propagating through a wireless channel. For example, bistatic sensing may include terminal-to-terminal bistatic sensing (i.e., UE-UE bistatic sensing, as shown in FIG. 1c), base station-to-base station bistatic sensing (i.e., gNB-gNB bistatic sensing, as shown in FIG. 1d), terminal-to-base station bistatic sensing (i.e., UE-gNB bistatic sensing, as shown in FIG. 1e), and base station-to-terminal bistatic sensing (i.e., gNB-UE bistatic sensing, as shown in FIG. 1f). Additionally, wireless sensing may also include interactive sensing, where, for example, a terminal or a base station actively transmits sensing signals that are received by a base station or a terminal without interacting with the sensed object, as shown in FIG. 1g.

2. Wireless Sensing Accuracy

The positioning accuracy of wireless sensing is typically characterized by root mean square errors ($\sigma$) in distance, velocity, and angle measurements. The positioning accuracy depends on both a wireless sensing waveform and an antenna parameter (such as a duration of a signal, a bandwidth, and a beamwidth), as well as a signal-to-noise ratio of an echo signal. The calculation formulas are shown in Table 1.

Table 1

| distance measurement accuracy | $\sigma_R = \dfrac{\Delta R}{\sqrt{2E/N_0}} = \dfrac{c}{2B\sqrt{2SNR}}$ |
|---|---|
| velocity measurement accuracy | $\sigma_v = \dfrac{\lambda}{2}\Delta f_d = \dfrac{\lambda}{2\tau\sqrt{2E/N_0}} = \dfrac{\lambda}{2\tau\sqrt{2SNR}}$ |

(continued)

| angle measurement accuracy | $\sigma_\theta = \dfrac{\theta_{3dB}}{1.6\sqrt{2E/N_0}} = \dfrac{\theta_{3dB}}{1.6\sqrt{2SNR}}$ |
|---|---|
| where E is the energy of the signal, $N_0$ is a noise power per bandwidth, c is the speed of light, SNR is a signal-to-noise ratio: $SNR = E/N_0$, $\tau$ is the duration of the signal (uncompressed pulse width): $\tau = MTr$. | |

As shown in Table 1 above, variables that a sensing device can control for the accuracy of wireless sensing include a signal bandwidth and a transmission power (i.e., signal-to-noise ratio). The larger the bandwidth and the transmission power of the transmission signal, the higher the wireless sensing accuracy.

3. Transmit Power and Transmit Resource for Sensing Signal

In radar sensing systems, the transmission spectrum is dedicated. Sensing signals are transmitted by large base stations or aircraft, which are not sensitive to power consumption. Additionally, it is assumed that the radio resource requirements for sensing services are relatively low (i.e., radio resources are considered abundant). Therefore, there are no restrictions on transmit power (e.g., transmission at a maximum power), and no radio resource allocation process is required.

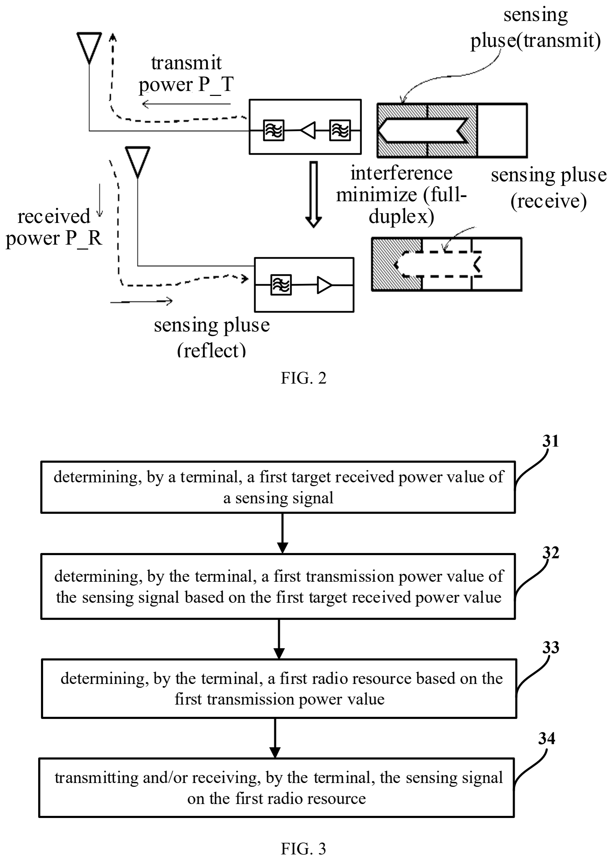

To meet a quality indicator of a sensing service while reducing interference with other devices, it is necessary to determine an "appropriate" transmit power P_T for the sensing signal. For example, when a device for transmitting the sensing signal is a terminal and the sensing mode is monostatic, as shown in FIG. 2, a larger transmit power P_T can increase the received power P_R, thereby improving the accuracy and precision of the sensing signal. However, a larger P_T may cause interference to other devices and reduce the operational lifetime of the terminal. Thus, an "appropriate" transmit power P_T needs to be determined.

Furthermore, regarding a resource position (including time and frequency domains) for transmitting the sensing signal: if all sensing signals are allocated by the network device, interference between device signals can be minimized to the greatest extent. However, this approach incurs signaling overhead during the resource application and allocation process and increases the latency of a sensing service. Moreover, when a terminal is in an idle state, the terminal must undergo a random access channel (Random Access Channel, RACH) process to enter a connected state, and can interact with the network device to apply for radio resource allocation.

Embodiments of the present disclosure provide a signal processing method and apparatus, and a terminal, to address issues of high resource consumption and high latency in current sensing signal transmission. The method and the apparatus (or terminal) are based on the same inventive concept. Since principles of solving the problem by the method and the apparatus (or terminal) are similar, implementations of the method and the apparatus (or terminal) may be referred to each other, and redundant details are not repeated here.

As shown in FIG. 3, an embodiment of the present disclosure provides a signal processing method, including the following steps.

Step 31: determining, by a terminal, a first target received power value of a sensing signal.

Optionally, the first target received power value is an expected target power value for receiving the sensing signal (for example, the first target received power value may be represented by $P0_{target\_UE}$). For example, when another device (such as another terminal or a network device) transmits a sensing signal and the terminal expects to receive the sensing signal, $P0_{target\_UE}$ represents an expected target power value at which the terminal can receive the sensing signal. Alternatively, after a terminal transmits a sensing signal, and the sensing signal undergoes air interface attenuation and/or object reflection process, $P0_{target\_UE}$ represents an expected target power value at which the terminal can receive the sensing signal after the sensing signal is transmitted by the terminal, and has undergone air interface attenuation and/or object reflection process. Alternatively, when a terminal transmits a sensing signal and another device (such as another terminal or a network device) expects to receive the sensing signal, $P0_{target\_UE}$ represents an expected target power value at which the other device can receive the sensing signal.

Here, $P0_{target\_UE}$ may be understood as: for a certain sensing service, when a power value of a sensing signal is greater than or equal to $P0_{target\_UE}$ from the perspective of a receiving-end device (such as a terminal or a network device), the relevant signal quality can meet the requirements of the sensing service quality, that is, the receiving-end device can effectively receive and calculate the sensing signal, and output a sensing result that meet the quality requirements of key indicators.

Optionally, the first target received power value is configured or indicated by a network device side, or the first target received power value is specified by a protocol. For example, in a case where the first target received power value is configured or indicated by the network device side, the network device may transmit first indication information to the terminal, where the first indication information is used to indicate the first target received power value. For example, a numerical range of the first target received power value configured or indicated by the network device side may be from -220 dBm to -90 dBm. In a case that the network device does not configure or indicate the first target received power value, the terminal may determine the first target received power value as a default value based on the protocol agreement, such as setting the default value to -110 dBm, etc., which is not limited in the embodiments of the present disclosure.

Step 32: determining, by the terminal, a first transmission power value of the sensing signal based on the first target received power value.

For example, the terminal may consider attenuation of the sensing signal during transmission, and compensate for the first target received power value, to obtain the first transmission power value of the sensing signal. The attenuation of the sensing signal during transmission includes but is not limited to at least one of the following: a path loss value of the sensing signal from a signal transmitter to an expected receiver, a first parameter value related to a frequency-domain resource occupied by the sensing signal, other power related parameter values, etc., which is not limited in the embodiments of the present disclosure.

Optionally, the first transmission power value may be understood as a value of a transmission power required when transmitting the sensing signal to satisfy the condition that a power of the sensing signal received by the receiving-end device is greater than or equal to the first target received power value (for example, the first transmission power value may be represented by $PT_{ToUE}$). Alternatively, the first transmission power value may also be understood as a power value for actually transmitting the sensing signal. For example, when another device (such as another terminal or a network device) transmits a sensing signal and the terminal expects to receive the sensing signal, $PT_{ToUE}$ represents a transmit power that the other device needs to satisfy when transmitting the sensing signal, to ensure that the power of the sensing signal received by the terminal is greater than or equal to $P0_{target\_UE}$. Alternatively, after the terminal transmits a sensing signal, and the sensing signal undergoes air interface attenuation and/or a reflection process, if the terminal expects to receive the sensing signal, then $PT_{ToUE}$ represents the transmit power that the terminal needs to satisfy when transmitting the sensing signal, to ensure that after air interface attenuation and/or object reflection, the power of the sensing signal received by the terminal is greater than or equal to $P0_{target\_UE}$. Alternatively, when a terminal transmits a sensing signal, and another device (such as another terminal or a network device) expects to receive the sensing signal, then then $PT_{ToUE}$ represents the transmit power that the terminal needs to satisfy when transmitting the sensing signal, to ensure that the power of the sensing signal received by the other device is greater than or equal to $P0_{target\_UE}$.

Step 33: determining, by the terminal, a first radio resource based on the first transmission power value.

For example, the terminal may determine the first radio resource based on a magnitude relationship between the first transmission power value and a reference power value. For example, if $PT_{ToUE}$ is greater than or equal to the reference power value, it indicates that the transmitted sensing signal has a relatively large interference on other devices. At this time, the network device side may allocate transmission and/or reception resources for the sensing signal to reduce interference on other devices. If $PT_{ToUE}$ is less than the reference power value, it indicates that the interference of the transmitted sensing signal to other devices is relatively small. At this time, the terminal may determine transmission and/or reception resources for the sensing signal on its own to reduce signaling overhead and reduce the transmission delay of the sensing signal. The other devices here may refer to a network device (such as gNB or a sensing server), or another terminal.

Step 34: transmitting and/or receiving, by the terminal, the sensing signal on the first radio resource.

In the above scheme, a terminal determines a first transmission power value for transmitting a sensing signal based on a first target received power value for receiving the sensing signal, and determines a first radio resource for transmitting and/or receiving the sensing signal based on the first transmission power value, so as to transmit and/or receive the sensing signal on the first radio resource. This can reduce the signaling overhead of allocating transmission and/or reception resources for the sensing signal by a network device, and can reduce the transmission delay of the sensing signal, thus solving a problem of high resource consumption and large delay in the current sensing signal transmission.

Optionally, the determining, by the terminal, the first transmission power value of the sensing signal based on the first target received power value includes but not limited to one of the following manners.

Manner 1: the terminal determines the first transmission power value based on the first target received power value and a first set, where the first set at least includes a path loss value of a first path and a first parameter value related to a frequency-domain resource occupied by the sensing signal.

It should be noted that the terminal may determine the first transmission power value based on the first target received power value and the first set. The first set may include a path loss value of a first path, a first parameter value related to a frequency-domain resource occupied by the sensing signal, or other power related parameter value(s). That is to say, the terminal may determine the first transmission power value based on the first target received power value, the path loss value of the first path, and the first parameter value. Alternatively, the terminal may determine the first transmission power value based on the first target received power value, the path loss value of the first path, the first parameter value, and other power related parameter value(s), which is not limited by the embodiments of the present disclosure.

For example, an example is given that the terminal determining the first transmission power value based on the first target received power value, the path loss value of the first path, and the first parameter value, the specific method for determining the first transmission power value is to determine the first transmission power value based on the sum of the first target received power value, the path loss value of the first path, and the first parameter value, as follows:

$$PT_{ToUE} = P0_{target\_UE} + f(M_{RB}^{SS}) + \quad PL_{ue\text{-}ue},$$ where $PL_{ue\text{-}ue}$ is the path loss value of the first path, and

$f(M_{RB}^{SS})$ is the first parameter value. Here, $f(M_{RB}^{SS})$ may also be understood as a function value related to the frequency-domain resource occupied by the sensing signal.

Manner 2: The terminal determines the first transmission power value based on the first target received power value and a second set, where the second set at least includes: a path loss value of a first path.

It should be noted that the terminal may determine the first transmission power value based on the first target received power value and the second set. The second set may include the path loss value of the first path, or may also include other power related parameter value(s). That is to say, the terminal may determine the first transmission power value based on the first target received power value and the path loss value of the first path; or the terminal may determine the first transmission power value based on the first target received power value, the path loss value of the first path, and other power related parameter value(s), which is not limited by the embodiments of the present disclosure.

For example, an example is given that the terminal determining the first transmission power value based on the first target received power value and the path loss value of the first path, the specific method for determining the first transmission power value is to determine the first transmission power value based on the sum of the first target received power value and the path loss value of the first path, as follows: $PT_{ToUE} = P0_{target\_UE} + PL_{ue\text{-}ue}$, where $PL_{ue\text{-}ue}$ is the path loss value of the first path.

Optionally, the first path is a path from a transmitter for the sensing signal to a first signal receiver, where the first signal receiver is an expected receiver for the sensing signal. For example, in a case that another device transmits a sensing signal, and the terminal expects to receive the sensing signal (i.e., the other device is the transmitter for the sensing signal and the terminal is the first signal receiver), then the first path is a path taken by the sensing signal from the other device to the terminal. Alternatively, in a case that the terminal expects to receive the sensing signal after the sensing signal is transmitted by the terminal, and undergoes air interface attenuation and reflection process (i.e., the terminal is both the transmitter and the receiver for the sensing signal), the first path is a path taken by the sensing signal from the terminal to the terminal after passing through the reflected object. Alternatively, in a case that the terminal sends a sensing signal and another device expects to receive the sensing signal (i.e., the terminal is the transmitter for the sensing signal and the other device is the first signal receiver), the first path is a path taken by the sensing signal from the terminal to the other device.

Optionally, the path loss value of the first path is less than or equal to a preset path loss value, where the preset path loss value is determined at least by a maximum sensing distance supported by a sensing service, a radar cross section (RCS), and a transmission frequency band of the sensing signal. That is to say, the preset path loss value may be determined by the maximum sensing distance supported by the sensing service, the RCS, the transmission frequency band of the sensing signal, or may also be determined by the maximum sensing distance supported by the sensing service, the RCS, the transmission frequency band of the sensing signal, and other path loss related parameter(s) of the sensing signal, which is not limited by the embodiments of the present disclosure.

For example, an example is given that the preset path loss value is determined based on the maximum sensing distance supported by the sensing service, the RCS, and the transmission frequency band of the sensing signal, the preset path loss value may be determined by the following formula: $PL_{max} = PL(L) + PL(\beta * L) + -10lg\ (RCS)$, where $PL_{max}$ is the preset path loss value, and $PL(\ )$ is the distance related path loss calculation formula. For example, $PL(L)$ is the path loss value at distance L, $PL(L) = 32.4 + 17.3Log_{10}(L) + 20Log_{10}(f_c)$, where $f_c$ is a carrier frequency for transmitting the sensing signal; $PL(\beta * L)$ is the path loss value at a distance of $\beta * L$, and $\beta * L$ is a length of a path of the reflected echo.

For example, when determining the path loss value if the path loss value of the first path is less than or equal to a preset path loss value, the path loss value of the first path may be determined based on an actual measured path loss value of the first path and the preset path loss value. For example, the path loss value of the first path is determined by the following formula: $PL_{ue\text{-}ue} = min\ (\alpha PL_{ue\text{-}SS}, PL_{max})$, where $PL_{ue\text{-}ue}$ is the path loss value of the first path; $PL_{ue\text{-}SS}$ is the measured path loss value; $PL_{max}$ is the preset path loss value, and $\alpha$ is the weighting factor. For example, when the terminal cannot obtain the $PL_{ue\text{-}ss}$ (if the relevant sensing signal has not been transmitted yet), the $PL_{ue\text{-}ss}$ may be set to infinity. For example, the weighting factor may be indicated by the network device side or determined based on a sensing service. This embodiment of the present disclosure is not limited to this.

Optionally, the determining, by the terminal, the first radio resource based on the first transmission power value includes:

determining, by the terminal, a second target received power value of the sensing signal;

determining, by the terminal, a second transmission power value of the sensing signal based on the second target received power value; and

determining, by the terminal, the first radio resource based on a magnitude relationship between the first transmission power value and the second transmission power value.

Optionally, the second target received power value is a power threshold for causing signal interference (for example, the second target received power value may be represented by $P0_{target\_gNB}$). For example, $P0_{target\_gNB}$ is a power value at which the sensing signal transmitted by the terminal is received by the network device after air interface attenuation and/or reflection. Here, since the network device is not the expected receiver of the sensing signal, when the sensing signal is received by the network device, it causes interference to the network device. That is to say, the $P0_{target\_gNB}$ may be understood as the interference level caused to the network device (e.g., a serving base station) when the terminal transmits the sensing signal.

Optionally, the second target received power value is configured or indicated by a network device side, or the second target received power value is agreed upon by a protocol. For example, in a case where the second target received power value is configured or indicated by the network device side, the network device may transmit second indication information to the terminal, and the second indication information is used to indicate the second target received power value. For example, the second target received power value configured or indicated by the network device may be an absolute value (such as a numerical range of the second target received power value may be from -220 dBm to -90 dBm), or the second target received power value configured or indicated by the network device may be a difference or an offset (offset) between the power threshold for causing sensing signal interference and the target power value $P0_{target\_C}$ used for communication, for example: $P0_{target\_gNB} = P0_{target\_C} - offset$, where $P0_{target\_C}$ may be a target power value indicated in a communication system in related technologies. In a case that the second target received power value is not configured on the network device side, the terminal may determine the second target received power value as a default value based on protocol agreement, such as setting the default value to -120 dBm, etc., which is not limited in the embodiments of the present disclosure.

Optionally, the second transmission power value may be understood as a transmission power value of the sensing signal at the time of transmission when the receiving-end device receives the sensing signal (for example, the second transmission power value may be represented by $PT_{TogNB}$). Alternatively, the second transmission power value may also be understood as a reference power value for transmitting the sensing signal, which satisfies the requirement of avoiding interference to other devices (here, the other device is a device that is undesired to receiving the sensing signal) when transmitting the sensing signal.

Optionally, the determining, by the terminal, the second transmission power value of the sensing signal based on the second target received power value includes but not limited to one of the following manners.

Manner 1: the terminal determines the second transmission power value based on the second target received power value and a third set, where the third set at least includes a path loss value of a second path and a first parameter value related to a frequency-domain resource occupied by the sensing signal.

It should be noted that the terminal may determine the second transmission power value based on the second target received power value and the third set, where the third set may include the path loss value of the second path, the first parameter value related to the frequency-domain resource occupied by the sensing signal, or may also include other power related parameter values. That is to say, the terminal may determine the second transmission power value based on the second target received power value, the path loss value of the second path, and the first parameter value; or, the terminal may determine the second transmission power value based on the second target received power value, the path loss value of the second path, the first parameter value, and other power related parameter values, which are not limited in the embodiments of the present disclosure.

For example, an example is taken that the terminal determines the second transmission power value based on the second target received power value, the path loss value of the second path, and the first parameter value, a specific method for determining the second transmission power value is to determine the second transmission power value based on the sum of the second target received power value, the path loss value of the second path, and the first parameter value, a formula is as follows: $PT_{TogNB} = P0_{target\_gNB} + f(M_{RB}^{SS}) + PL_{ue-gNB}$, where $PL_{ue-gNB}$ is the path loss value of the second path, and $f(M_{RB}^{SS})$ is the first parameter value. Here, $f(M_{RB}^{SS})$ may also be understood as a function value related to the frequency-domain resource occupied by the sensing signal.

Manner 2: the terminal determines the second transmission power value based on the second target received power value and a fourth set, where the fourth set at least includes a path loss value of a second path, the first parameter value, and a first gain value.

It should be noted that the terminal may determine the second transmission power value based on the second target received power value and the fourth set, where the fourth set may include the path loss value of the second path, the first parameter value related to the frequency-domain resource occupied by the sensing signal, the first gain value, or may also include other power related parameter values. That is to say, the terminal may determine the second transmission power value based on the second target received power value, the path loss value of the second path, the first parameter value, and the first gain value. Alternatively, the terminal may determine the second transmission power value based on the second target received power value, the path loss value of the second path, the first parameter value, the first gain value, and other power related parameter values. The embodiments of the present disclosure are not limited thereto.

For example, an example is given that the terminal determines the second transmission power value based on the second target received power value, the path loss value of the second path, the first parameter value, and the first gain value, a specific method for determining the second transmission power value is to determine the second transmission power value based on the sum of the second target received power value, the path loss value of the second path, the first parameter value, and the first gain value, and a formula is follows:

$$PT_{TogNB} = P0_{target\_gNB} + f(M_{RB}^{SS}) + PL_{ue-gNB} + g(\theta_d),$$ where $PL_{ue-gNB}$ is the path loss value of the second path, $g(\theta_d)$ is the first gain value, and $f(M_{RB}^{SS})$ is the first parameter value. Here, $f(M_{RB}^{SS})$ may also be understood as a function value related to the frequency-domain resource occupied by the sensing signal.

Manner 3: determining, by the terminal, the second transmission power value based on the second target received power value and a fifth set, where the fifth set at least includes the path loss value of the second path.

It should be noted that the terminal may determine the second transmission power value based on the second target received power value and the fifth set; where the fifth set may include the path loss value of the second path, or may also include other power related parameter values, etc. That is to say, the terminal may determine the second transmission power value based on the second target received power value and the path loss value of the second path; or, the terminal may determine the second transmission power value based on the second target received power value, the path loss value of the second path, and other power related parameter values, which is not limited in the embodiments of the present disclosure.

For example, an example is given that the terminal determines the second transmission power value based on the second target received power value and the path loss value of the second path, a specific method for determining the second transmission power value is to determine the second transmission power value based on the sum of the second target received power value and the path loss value of the second path, and a formula is follows: $PT_{TogNB} = P0_{target\_gNB} + PL_{ue-gNB}$, where $PL_{ue-gNB}$ is the path loss value of the second path.

Optionally, the second path is a path from a transmitter for the sensing signal to a second signal receiver, where the second signal receiver is a receiver interfered by the sensing signal, or the second signal receiver may also be understood as an unexpected receiver for the sensing signal. For example, in a case that a terminal sends a sensing signal, and the sensing signal is received by a network device after air interface attenuation and/or reflection (i.e., the terminal is the transmitter for the sensing signal and the network device is the second signal receiver), the second path is a path that the sensing signal propagates from the terminal to the network device.

Optionally, the path loss value of the second path is determined by a first reference signal, and the first reference signal includes at least one of the following:

a reference signal configured for a sensing service;
a reference signal used for determining a transmission power of a PUCCH;
a reference signal used for determining a transmission power of a PUSCH; or
a synchronization signal block used for obtaining an MIB.

For example, the terminal may use a reference signal with an index $q_d$ as the reference signal (i.e., the first reference signal, and the reference signal with the index $q_d$ may be the reference signal configured for the sensing service, or in a case that there is no dedicated reference signal configured for sensing services in the network device, the reference signal with the index $q_d$ may also be a reference signal $q_d$ used for calculating the transmission power of PUCCH, or a reference signal $q_d$ used for calculating the transmission power of PUSCH, or a synchronization signal block used for obtaining MIB, etc.). For example, the terminal may determine the path loss value of the second path based on the difference between the transmission power of the reference signal with the index $q_d$ indicated by the network device and the received power of the reference signal. The unit of the path loss value of the second path is dB.

Optionally, the first gain value is a gain value of a beam direction difference between a signal received by the terminal from the second signal receiver and the sensing signal received by the terminal. For example, if the first gain value is less than or equal to a reference gain value, the reference gain value may be indicated by the network device or determined based on the beam gain. The embodiments of the present disclosure are not limited to this.

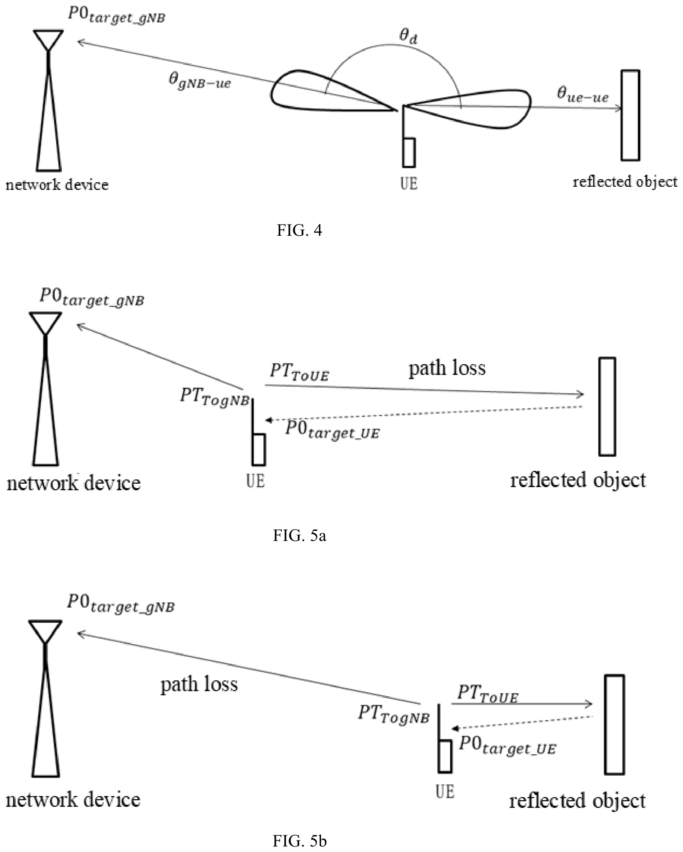

For example, as shown in FIG. 4, the terminal may calculate a gain value based on the beam direction difference between the signal received by the terminal from the second signal receiver (note: referring to the network device in FIG. 4) and the sensing signal received by the terminal. Considering that the unit of the gain value is dB, it is necessary to perform equivalent conversion on the beam direction difference when calculating this gain value. For example, a gain value corresponding to the beam direction difference is converted according to $12\left(\frac{\theta_d}{\theta_{XdB}}\right)$, and then the first gain value may be determined by the following formula: $g(\theta_d) = min\left\{12\left(\frac{\theta_d}{\theta_{XdB}}\right), G_m\right\}$, where $g(\theta_d)$ is the first gain value, $\theta_d$ is the difference between the beam direction of the signal received by the terminal from the second signal receiver and the beam direction of the sensing signal received by the terminal. Here, $\theta_d = \theta_{ue\text{-}ue} - \theta_{gNB\text{-}ue}$, where $\theta_{ue\text{-}ue}$ is the beam direction in which the terminal receives the sensing signal, and $\theta_{gNB\text{-}ue}$ is the beam direction in which the terminal receives the signal transmitted by the second signal receiver. In case of $\theta_d = 0$, it indicates that the two beam directions are the same, and in case of $\theta_d = \pi$, it indicates that the two beam directions are opposite. $\theta_{ue\text{-}ue}$ and $\theta_{gNB\text{-}ue}$ may be determined by the terminal based on the beam directions for receiving the signal sent by the network device and the sensing signal, respectively.

$\theta_{XdB}$ is an angle value corresponding to a gain attenuation of XdB, and X is a constant value (for example, X may be set to 3, but X may also be set to other values, which is not limited in the embodiments of the present disclosure). Here, $\theta_{XdB}$ or X c may be configured or indicated by the network device side; or, $\theta_{XdB}$ or X may be set based on the beam gain, etc., which is not limited in the embodiments of the present disclosure.

$G_m$ is the reference gain value. Here, $G_m$ may also be indicated by the network device side or determined based on the beam gain, for example, setting $G_m = 20$ dB, which is not limited in the embodiments of the present disclosure.

It should be noted that, the aforementioned $\theta_d$ essentially refers to an angular difference between a best beam direction (i.e., a direction with the maximum gain) of a transmission beam when the terminal transmits a sensing signal with directivity, and the direction of the sensing signal towards the second signal receiver (e.g., the network device). Considering the reciprocity of the spatial channel, $\theta_d$ in the embodiments of the present disclosure is described as a direction difference between two reception beams.

Optionally, when determining the first transmission power value and/or determining the second transmission power value, the first parameter value used may be determined in the following way: the first parameter value is determined by a quantity of RBs occupied by the sensing signal in the frequency domain; or the first parameter value is determined by the quantity of REs occupied by the sensing signal in the frequency domain.

For example, the first reference value may be determined based on a function related to the quantity of RBs occupied by the sensing signal in the frequency domain (for example, the function takes the quantity of RBs as a variable, and a value of the function is the first parameter value), or the first reference value may be determined based on a function related to the quantity of REs occupied by the sensing signal in the frequency domain (for example, the function takes the quantity of REs as a variable, and the value of the function is the first parameter value), etc., which is not limited in the embodiments of the present disclosure.

Optionally, the first parameter value is determined by a quantity of resource blocks (RBs) occupied by the sensing signal in a frequency domain, including: determining the first parameter value by a formula:

$$f(M_{RB}^{SS}) = 10\,log_2(2^\mu * M_{RB}^{SS})$$ , where $f(M_{RB}^{SS})$ is the first parameter value, $\mu$ is a subcarrier spacing configuration parameter, and $M_{RB}^{SS}$ is the quantity of the RBs occupied by the sensing signal in the frequency domain.

For example, when allocating resources in unit of RBs in the frequency domain of the sensing signal, the first parameter value may be determined based on a formula: $f(M_{RB}^{SS}) = 10\,log_2(2^\mu * M_{RB}^{SS})$. The unit of the first parameter value is decibel milliwatt (dBm). To improve the scheduling flexibility, the function $f(M_{RB}^{SS})$ of the first parameter value may also be multiplied by a factor $a_d$, which may be determined based on a sensing service, configured or indicated by the network device side, or determined by the terminal according to the sensing service quality requirements. The embodiments of the present disclosure are not limited thereto.

Optionally, the first parameter value is determined by a quantity of REs occupied by the sensing signal in a frequency domain, including: determining the first parameter value by a formula:

$$f(M_{RE}^{SS}) = 10\,log_2(2^\mu * \lceil M_{RE}^{SS}/12 \rceil)$$ , where $f(M_{RE}^{SS})$ is the first parameter value, $\mu$ is the subcarrier spacing configuration parameter, and $M_{RE}^{SS}$ is the quantity of the REs occupied by the sensing signal in the frequency domain.

For example, in the case of resource allocation in the frequency domain of the sensing signal in units of RE, the first reference value may be determined by the formula: $f(M_{RE}^{SS}) = 10\,log_2(2^\mu * \lceil M_{RE}^{SS}/12 \rceil)$. One RB consists of 12 REs. The unit of the first parameter value here is decibel milliwatt (dBm). To improve the scheduling flexibility, the function $f(M_{RB}^{SS})$ of the first parameter value may also be multiplied by a factor $a_d$, and the factor $a_d$ may be determined based on a sensing service, configured or indicated by the network device side, or determined by the terminal according to the sensing service quality requirements. This embodiment of the present disclosure is not limited thereto.

Optionally, as an implementation, the determining, by the terminal, the radio resource obtaining mode based on the magnitude relationship between the first transmission power value and the second transmission power value includes:

in a case where the first transmission power value is greater than or equal to the second transmission power value, determining, by the terminal, a radio resource indicated by the network device side as a first obtaining mode; for instance, the network device indicates a specific radio resource as the first radio resource; and/or,
in a case where the first transmission power value is less than the second transmission power value, determining, by the terminal, the first radio resource by itself; for instance, the terminal determines the first radio resource by itself from multiple radio resources configured or indicated by the network device side.

Optionally, as another implementation, the determining, by the terminal, the first radio resource based on the magnitude relationship between the first transmission power value and the second transmission power value includes:

determining, by the terminal, a radio resource obtaining mode based on the magnitude relationship between the first transmission power value and the second transmission power value; and
determining, by the terminal, the first radio resource based on the radio resource obtaining mode.

For example, the resource obtaining mode may include but not limited to at least one of the following.

a first obtaining mode, which is that the first radio resource is indicated by the network device side; for example, the network device side indicates a specific radio resource as the first radio resource.
a second obtaining mode, which is that the terminal determines the first radio resource by itself; for example, the terminal determines the first radio resource by itself from multiple radio resources configured or indicated by the network device side.

Optionally, the determining, by the terminal, the radio resource obtaining mode based on the magnitude relationship between the first transmission power value and the second transmission power value includes:

in a case where the first transmission power value is greater than or equal to the second transmission power value, determining, by the terminal, the radio resource obtaining mode as a first obtaining mode, where the first obtaining mode is that the network device indicates the first radio resource; for example, the network device side indicates a specific radio resource as the first radio resource; and/or,
in a case where the first transmission power value is less than the second transmission power value, determining, by the terminal, the radio resource obtaining mode as a second obtaining mode, where second obtaining mode is that the terminal independently determines the first radio resource; for example, the terminal determines the first radio resource by itself from multiple radio resources configured or indicated by the network device side.

For the first obtaining mode (Mode-1), it may also be referred to as a restricted uplink resource determination mode. For example, as shown in FIG. 5a, when a power of a sensing signal sent by a terminal or another device arriving at a network device is higher than a certain threshold (e.g., greater than or equal to $P0_{target\_gNB}$), if the terminal determines a radio resource for transmitting the sensing signal by itself, it may cause significant interference to uplink reception of the network device. To reduce this interference, the terminal may use the Mode-1 to determine the first radio resource for transmitting and/or receiving the sensing signal, i.e., the network device side indicates a specific radio resource (for example, when the specific radio resource is allocated by the network device side for the terminal to transmit the sensing signal, it is not allocated to other terminal(s), thus avoiding interference to the uplink reception of the network device) as the first radio resource. Then, the terminal only transmits the sensing signal on the radio resource specified by the network device side.

For the second obtaining mode (Mode-2), it may also be referred to as a free uplink resource determination mode. For example, as shown in FIG. 5b, when the power of the sensing signal sent by the terminal or another device arriving at the network device is lower than a certain threshold (e.g., less than $P0_{target\_gNB}$), the interference level of the sensing signal sent by the terminal arriving at the base station is low, meaning it causes little interference to the uplink reception of the network device. In this case, the terminal may use Mode-2 to determine the first radio resource for transmitting and/or receiving the sensing signal, i.e., the terminal can independently select a radio resource within a resource set or a resource pool for the sensing signal configured or indicated by the network device. For example, the terminal may select any radio resource within the resource set or the resource pool to transmit and/or receive the sensing signal, without the process of the network device specifying the radio resource.

It should be noted that in the embodiments of the present disclosure, the first radio resource is determined based on the magnitude relationship between the first transmission power value and the second transmission power value. Alternatively, in a case where the radio resource obtaining mode is determined based on the magnitude relationship between the first transmission power value and the second transmission power value, the first transmission power value may be determined using manner 1 or manner 2 as described above, and the second transmission power value may be determined using manner 1, or manner 2, or manner 3 as described above. Optionally, both manner 2 for determining the first transmission power value and manner 3 for determining the second transmission power value involve the same first parameter value. Therefore, manner 2 for determining the first transmission power value and manner 3 for determining the second transmission power value may be used to determine the first radio resource or determine the radio resource obtaining mode based on the size relationship between the first and second transmission power values as determined, which are not limited in the embodiments of the present disclosure.

Optionally, the transmitting, by the terminal, the sensing signal on the first radio resource includes:

transmitting, by the terminal, the sensing signal on the first radio resource at the first transmission power value or the second transmission power value;
receiving, by the terminal, an echo signal reflected by the sensing signal;
adjusting, by the terminal, the first transmission power value or the second transmission power value based on a received power value of the echo signal; and
transmitting, by the terminal, the sensing signal on the first radio resource at the adjusted first transmission power value or the adjusted second transmission power value.

Specifically, during the process of executing a sensing service (e.g., when detecting and tracking a sensing object), when the terminal transmits a sensing signal on the first radio resource, the terminal can adjust a transmission power $PT_{ToUE}$ of the transmitted sensing signal based on an actually detected reflected signal (or echo signal). For example, the terminal starts transmitting the sensing signal with an initial transmission power P_T; where the initial transmission power P_T is the first transmission power value or the second transmission power value. Further, the terminal receives the reflected signal (or echo signal) of the sensing signal and calculates the received power value P_R based on the reflected signal (or echo signal). The terminal gradually increases or decreases the transmission power P_T for transmitting the sensing signal based on P_R until a difference between P_R and $P0_{target\_UE}$ meets a certain condition (e.g., the difference between P_R and $P0_{target\_UE}$ falls within a first numerical range of delta1 to delta2, where delta1 and delta2 may be configured or indicated by the network device side).

Optionally, a determination manner for the terminal to transmit the sensing signal on the first radio resource at the first transmission power value or the second transmission power value includes:

determining, by the terminal, to transmit a sensing signal at the first transmission power value on the first radio resource; or
determining, by the terminal, to transmit the sensing signal at the second transmission power value on the first radio resource; or
determining, by the terminal, to transmit a sensing signal on the first radio resource using the smaller one of the first transmission power value and the second transmission power value; or
determining, by the terminal, to transmit a sensing signal on the first radio resource using the larger one of the first transmission power value and the second transmission power value.

Optionally, the adjusting, by the terminal, the first transmission power value or the second transmission power value based on the received power value of the echo signal includes: adjusting, by the terminal, the first transmission power value or the second transmission power value according to a first step, in a case that a difference between the received power value of the echo signal and the first target received power value is within a first numerical range.

For example, the first numerical range is from delta1 to delta2. Optionally, the first numerical range is configured or indicated by the network device side, such as delta1 and delta2 being configured or indicated by the network device side.

Optionally, the first step is a maximum and/or minimum within the first numerical range. For example, in a case where the difference between the received power value of the echo signal and the first target received power value is greater than deltal, the transmission power P_T may be gradually reduced according to the first step of deltal; and/or, in a case where the difference between the received power value of the echo signal and the first target received power value is less than delta2, the transmission power P_T may be gradually increased according to the first step of delta2.

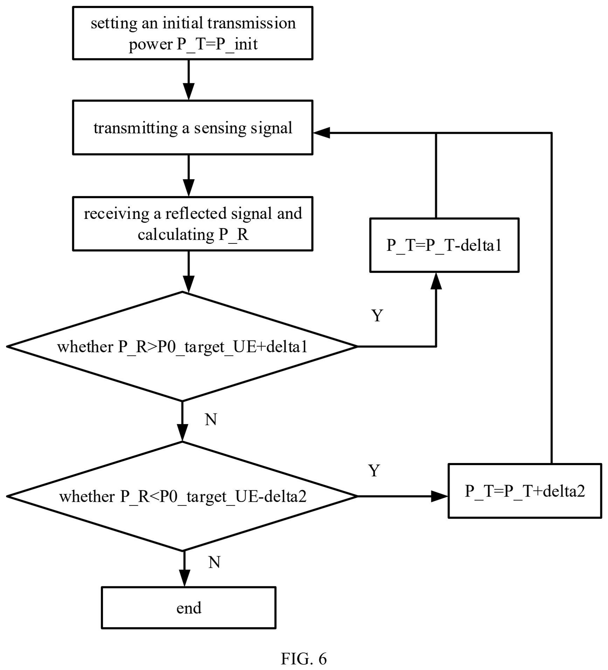

As shown in FIG. 6, the process of the terminal transmitting the sensing signal on the first radio resource is as follows:

setting an initial transmission power P_T=P_init, where P_init may take the first transmission power value $PT_{ToUE}$ calculated by the above formula, or the second transmission power value $PT_{TogNB}$;

the terminal starting transmitting a signal from the power value P_init;

the terminal receiving a reflected signal of the sensing signal, calculating a received power P_R based on the received reflected signal, and determining whether P_R > P0_target - UE + deltal;

if so, re-determining the transmission power according to P_T = P_T - delta1, and continuing to transmit the sensing signal according to the re-determined transmission power P_T;

if not, continuing to check if P_R < PO_target_UE - delta2;

if so, re-determining the transmission power according to P_T = P_T + delta2, and continuing to transmit the sensing signal according to the re-determined transmission power P_T; and

if not, the process ending.

In the embodiments of the present disclosure, the terminal may determine an "appropriate" transmission power for a sensing signal, and may determine a first radio resource for transmitting and/or receiving the sensing signal based on the transmission power, so that the terminal can ensure the service quality of the sensing signal in terms of transmission power and resource selection, while reducing the amount of information interaction between the terminal and the network device, and facilitating the rapid determination of sensing resources and saving power consumption.

The network device involved in the embodiments of the present disclosure may be a base station or a sensing server. The base station may include multiple cells that provide services to terminals. Depending on the specific application scenario, the base station may be called access point, or may be a device in the access network that communicates over an air interface with wireless terminal devices through one or more sectors, or may be called another name. The network device may be used for converting the received radio frames into Internet protocol (IP) packets or vice versa, and serves as a router between the wireless terminals and the rest of the access network. The rest of the access network may include an IP communication network. The network device may also coordinate the attribute management of the air interface. For example, the network device involved in the embodiments of the present disclosure may be a base transceiver station (BTS) in the global system for mobile communications (GSM) or code division multiple access (CDMA), a NodeB in the wide-band code division multiple access (WCDMA), an evolved Node B (eNB or e-NodeB) in long term evolution (LTE) system, a 5G base station (gNB) in 5G network architecture (next generation system), a home evolved Node B (HeNB), a relay node, a femto, a pico, or the like, which is not limited herein. In some network architectures, the network device may include a centralized unit (CU) node and a distributed unit (DU) node, which may be geographically separated.

The terminal device involved in the embodiments of the present disclosure may be a device that provides voice and/or data connectivity to a user, a handheld device with a radio connection function, or other processing devices connected to a radio modem or the like. In different systems, the names of terminal may be different. For example, in a 5G system, a terminal may be referred to as user equipment (User Equipment, UE). A wireless terminal can communicate with one or more core networks (Core Network, CN) via a radio access network (Radio Access Network, RAN), and the wireless terminal may be a mobile terminal, such as a mobile phone (or referred to as "cellular" phone) and a computer with a mobile terminal, such as a portable, pocket-sized, hand-held, computer built-in or vehicle-mounted mobile apparatus, which exchange voice and/or data with the radio access network. For example, personal communication service (Personal Communication Service, PCS) phones, cordless phones, session initiated protocol (Session Initiated Protocol, SIP) phones, wireless local loop (Wireless Local Loop, WLL) stations, personal digital assistant (Personal Digital Assistant, PDA) and other devices. The wireless terminal may also be referred to as a system, subscriber unit (subscriber unit), subscriber station (subscriber station), mobile station (mobile station), mobile (mobile), remote station (remote station), access point (access point), remote terminal (remote terminal), access terminal (access terminal), user terminal (user terminal), user agent (user agent) and user device (user device), which are not limited in the embodiments of the present disclosure.

The signal processing method of the present disclosure has been introduced in the above embodiments. A corresponding device and terminal will be further explained below in some embodiments will in conjunction with the accompanying drawings.

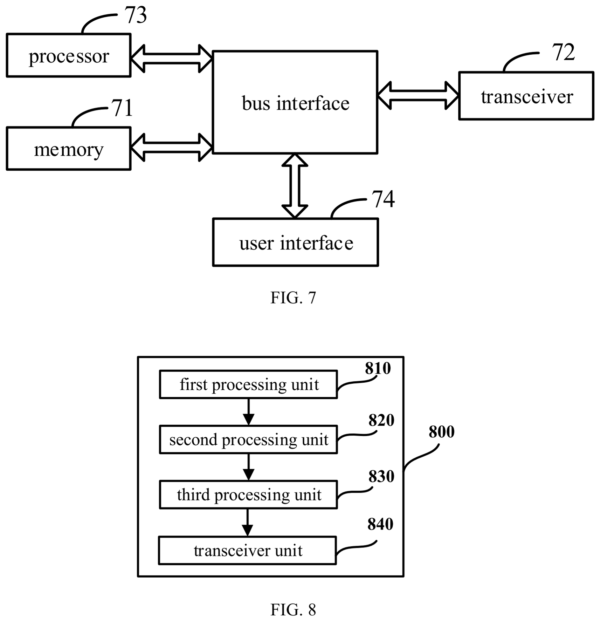

As shown in FIG. 7, an embodiment of the present disclosure provides a terminal, including a memory 71, a transceiver 72, and a processor 73. The memory 71 is configured to store a computer program; the transceiver 72 is configured to transmit and receive data under the control of the processor 73; the transceiver 72 is configured to receive and transmit data under the control of processor 73; and the processor 73 is configured to read the computer program from the memory 71 and perform the following operations:

determining a first target received power value of a sensing signal;
determining a first transmission power value of the sensing signal based on the first target received power value;
determining a first radio resource based on the first transmission power value; and
transmitting and/or receiving the sensing signal on the first radio resource.

Optionally, the first target received power value is an expected target power value for receiving the sensing signal; and the first target received power value is configured by a network device side or defined by a protocol.

Optionally, the processor 73 is configured to read the computer program from the memory 71 and perform the following operations:

determining the first transmission power value based on the first target received power value and a first set, where the first set at least includes a path loss value of a first path and a first parameter value related to a frequency-domain resource occupied by the sensing signal; or
determining the first transmission power value based on the first target received power value and a second set, where the second set at least includes: a path loss value of a first path,
where the first path is a path from a transmitter for the sensing signal to a first signal receiver, and the first signal receiver is an expected receiver for the sensing signal.

Optionally, the path loss value of the first path is less than or equal to a preset path loss value, and the preset path loss value is determined at least by a maximum sensing distance supported by a sensing service, a radar cross section (RCS), and a transmission frequency band of the sensing signal.

Optionally, the processor 73 is configured to read the computer program from the memory 71 and perform the following operations:

determining a second target received power value of the sensing signal;
determining a second transmission power value of the sensing signal based on the second target received power value; and
determining the first radio resource based on a magnitude relationship between the first transmission power value and the second transmission power value.

Optionally, the second target received power value is a power threshold at which the sensing signal causes interference; and the second target received power value is configured by a network device side or defined by a protocol.

Optionally, the processor 73 is configured to read the computer program from the memory 71 and perform the following operations:

determining the second transmission power value based on the second target received power value and a third set, where the third set at least includes a path loss value of a second path and a first parameter value related to a frequency-domain resource occupied by the sensing signal; or
determining the second transmission power value based on the second target received power value and a fourth set, where the fourth set at least includes a path loss value of a second path, the first parameter value, and a first gain value; or
determining the second transmission power value based on the second target received power value and a fifth set, where the fifth set at least includes the path loss value of the second path,
where the second path is a path from a transmitter for the sensing signal to a second signal receiver, and the second signal receiver is a receiver interfered by the sensing signal, and the first gain value is a gain value of a difference between a beam direction of a signal received by the terminal from the second signal receiver and a beam direction of the sensing signal received by the terminal.

Optionally, the path loss value of the second path is determined by a first reference signal, and the first reference signal includes at least one of the following:

a reference signal configured for a sensing service;
a reference signal used for determining a transmission power of a physical uplink control channel (PUCCH);
a reference signal used for determining a transmission power of a physical uplink shared channel (PUSCH); or
a synchronization signal block used for obtaining a master information block (MIB).

Optionally, the first gain value is determined by a formula: $g(\theta_d) = min\left\{12\left(\frac{\theta_d}{\theta_{XdB}}\right), G_m\right\}$, where $g(\theta_d)$ is the first gain value, $\theta_{XdB}$ is an angle value corresponding to a gain attenuation of XdB, $G_m$ is a reference gain value, and $\theta_d$ is a difference between a beam direction of the signal received by the terminal from the second signal receiver and a beam direction of the sensing signal received by the terminal.

Optionally, the first parameter value is determined by a quantity of resource blocks (RBs) occupied by the sensing signal in the frequency domain; or the first parameter value is determined by the quantity of resource units (REs) occupied by the sensing signal in the frequency domain.

Optionally, the first parameter value being determined by the quantity of resource blocks (RBs) occupied by the sensing signal in the frequency domain includes: determining the first parameter value by a formula:

$$f(M_{RB}^{SS}) = 10\,log_2(2^\mu * M_{RB}^{SS})$$, where $f(M_{RB}^{SS})$ is the first parameter value, $\mu$ is a subcarrier spacing configuration parameter, and $M_{RB}^{SS}$ is the quantity of the RBs occupied by the sensing signal in the frequency domain.

Optionally, the first parameter value being determined by the quantity of resource units (RE) occupied by the sensing signal in the frequency domain includes: determining the first parameter value by a formula:

$$f(M_{RB}^{SS}) = 10\,log_2(2^\mu * M_{RB}^{SS})$$, where $f(M_{RB}^{SS})$ is the first parameter value, $\mu$ is a subcarrier spacing configuration parameter, and $M_{RB}^{SS}$ is the quantity of the RBs occupied by the sensing signal in the frequency domain.

Optionally, the processor 73 is configured to read the computer program from the memory 71 and perform the following operations:

determining a radio resource obtaining mode based on the magnitude relationship between the first transmission power value and the second transmission power value; and
determining the first radio resource based on the radio resource obtaining mode.

Optionally, the processor 73 is configured to read the computer program from the memory 71 and perform the following operations:

in a case where the first transmission power value is greater than or equal to the second transmission power value, determining the radio resource obtaining mode as a first obtaining mode, where the first obtaining mode is that the network device indicates the first radio resource; and/or,
in a case where the first transmission power value is less than the second transmission power value, determining the radio resource obtaining mode as a second obtaining mode, where second obtaining mode is that the terminal independently determines the first radio resource.

Optionally, the processor 73 is configured to read the computer program from the memory 71 and perform the following operations:

transmitting the sensing signal on the first radio resource at the first transmission power value or the second transmission power value;
receiving an echo signal reflected by the sensing signal;
adjusting the first transmission power value or the second transmission power value based on a received power value of the echo signal; and
transmitting the sensing signal on the first radio resource at the adjusted first transmission power value or the adjusted second transmission power value.

Optionally, the processor 73 is configured to read the computer program from the memory 71 and perform the following operations: adjusting the first transmission power value or the second transmission power value according to a first step, in a case that a difference between the received power value of the echo signal and the first target received power value is within a first numerical range.

Optionally, the first numerical range is configured by a network device side; and the first step is a maximum or a minimum within the first numerical range.

In FIG. 7, the bus architecture may include any quantity of interconnected buses and bridges, specifically one or more processors represented by the processor 73 and various circuits of memory represented by the memory 71 connected together. The bus architecture may also link various other circuits such as peripheral devices, voltage regulators, power management circuits, etc., which are well-known in the art, and therefore, no further descriptions are provided herein. The bus interface provides an interface. The transceiver 72 may be a plurality of elements, that is, include a transmitter and a receiver, and provide a unit for communicating with various other devices on a transmission medium. For different user equipment, the user interface 74 may also be an interface capable of externally or internally connecting to required equipment. The connected equipment includes but not limited to a keypad, a display, a speaker, a microphone, a joystick, and the like.

The processor 73 is responsible for managing the bus architecture and usual processing, while the memory 71 may store the data used by the processor 73 when performing operations.

Optionally, the processor 73 may be a central processing unit (Central Processing Unit, CPU), an application specific integrated circuit (Application Specific Integrated Circuit, ASIC), a field-programmable gate array (Field-Programmable Gate Array, FPGA) or a complex programmable logic device (Complex Programmable Logic Device, CPLD). The processor may also adopt a multi-core architecture.

The processor is configured to execute any one of the methods provided in the embodiments of the present application according to the obtained executable instructions by invoking the computer program stored in the memory. The processor and the memory may also be physically separated.

It should be noted that the above apparatus provided in the embodiment of the present disclosure can implement all method steps implemented in the above method embodiments, and can achieve the same technical effects. Therefore, the description and the beneficial effect of this embedment that are the same as the method embodiments will not be introduced here in detail.

As shown in FIG. 8, an embodiment of the present disclosure further provides a terminal 800, including:

a first processing unit 810, configured to determine a first target received power value of a sensing signal;
a second processing unit 820, configured to determine a first transmission power value of the sensing signal based on the first target received power value;
a third processing unit 830, configured to determine a first radio resource based on the first transmission power value; and
a transceiver unit 840, configured to transmit and/or receive the sensing signal on the first radio resource.

Optionally, the first target received power value is an expected target power value for receiving the sensing signal; and the first target received power value is configured by a network device side or defined by a protocol.

Optionally, the second processing unit 820 is further configured to:

determine the first transmission power value based on the first target received power value and a first set, where the first set at least includes a path loss value of a first path and a first parameter value related to a frequency-domain resource occupied by the sensing signal; or
determine the first transmission power value based on the first target received power value and a second set, where the second set at least includes: a path loss value of a first path,
where the first path is a path from a transmitter for the sensing signal to a first signal receiver, and the first signal receiver is an expected receiver for the sensing signal.

Optionally, the path loss value of the first path is less than or equal to a preset path loss value; and the preset path loss value is determined at least by a maximum sensing distance supported by a sensing service, a radar cross section (RCS), and a transmission frequency band of the sensing signal.

Optionally, the third processing unit 830 is further configured to:

determine a second target received power value of the sensing signal;
determine a second transmission power value of the sensing signal based on the second target received power value; and
determine the first radio resource based on a magnitude relationship between the first transmission power value and the second transmission power value.

Optionally, the second target received power value is a power threshold at which the sensing signal causes interference; and the second target received power value is configured by a network device side or defined by a protocol.

Optionally, the third processing unit 830 is further configured to:

determine the second transmission power value based on the second target received power value and a third set, where the third set at least includes a path loss value of a second path and a first parameter value related to a frequency-domain resource occupied by the sensing signal; or

determine the second transmission power value based on the second target received power value and a fourth set, where the fourth set at least includes a path loss value of a second path, the first parameter value, and a first gain value; or

determine the second transmission power value based on the second target received power value and a fifth set, where the fifth set at least includes the path loss value of the second path, where the second path is a path from a transmitter for the sensing signal to a second signal receiver, and the second signal receiver is a receiver interfered by the sensing signal, and the first gain value is a gain value of a difference between a beam direction of a signal received by the terminal from the second signal receiver and a beam direction of the sensing signal received by the terminal.

Optionally, the path loss value of the second path is determined by a first reference signal, and the first reference signal includes at least one of the following:

a reference signal configured for a sensing service;
a reference signal used for determining a transmission power of a physical uplink control channel (PUCCH);
a reference signal used for determining a transmission power of a physical uplink shared channel (PUSCH); or
a synchronization signal block used for obtaining a master information block (MIB).

Optionally, the first gain value is determined by a formula: $g(\theta_d) = min\left\{12\left(\frac{\theta_d}{\theta_{XdB}}\right), G_m\right\}$, where $g(\theta_d)$ is the first gain value, $\theta_{XdB}$ is an angle value corresponding to a gain attenuation of XdB, $G_m$ is a reference gain value, and $\theta_d$ is a difference between a beam direction of the signal received by the terminal from the second signal receiver and a beam direction of the sensing signal received by the terminal.

Optionally, the first parameter value is determined by a quantity of resource blocks (RBs) occupied by the sensing signal in the frequency domain; or the first parameter value is determined by the quantity of resource units (REs) occupied by the sensing signal in the frequency domain.

Optionally, the first parameter value being determined by the quantity of resource blocks (RBs) occupied by the sensing signal in the frequency domain includes: determining the first parameter value by a formula:

$$f(M_{RB}^{SS}) = 10\, log_2(2^\mu * M_{RB}^{SS})$$, where $f(M_{RB}^{SS})$ is the first parameter value, $\mu$ is a subcarrier spacing configuration parameter, and $M_{RB}^{SS}$ is the quantity of the RBs occupied by the sensing signal in the frequency domain.

Optionally, the first parameter value being determined by the quantity of resource units (RE) occupied by the sensing signal in the frequency domain includes: determining the first parameter value by a formula:

$$f(M_{RE}^{SS}) = 10\, log_2(2^\mu * \lceil M_{RE}^{SS}/12\rceil)$$, where $f(M_{RE}^{SS})$ is the first parameter value, $\mu$ is the subcarrier spacing configuration parameter, and $M_{RE}^{SS}$ is the quantity of the REs occupied by the sensing signal in the frequency domain.

Optionally, the third processing unit 830 is further configured to:

determine a radio resource obtaining mode based on the magnitude relationship between the first transmission power value and the second transmission power value; and
determine the first radio resource based on the radio resource obtaining mode.

Optionally, the third processing unit 830 is further configured to:

in a case where the first transmission power value is greater than or equal to the second transmission power value, determine the radio resource obtaining mode as a first obtaining mode, where the first obtaining mode is that the network device indicates the first radio resource; and/or,
in a case where the first transmission power value is less than the second transmission power value, determine the radio resource obtaining mode as a second obtaining mode, where second obtaining mode is that the terminal independently determines the first radio resource.

Optionally, the transceiver unit 840 is further configured to:

transmit the sensing signal on the first radio resource at the first transmission power value or the second transmission power value;

receive an echo signal reflected by the sensing signal;

adjust the first transmission power value or the second transmission power value based on a received power value of the echo signal; and

transmit the sensing signal on the first radio resource at the adjusted first transmission power value or the adjusted second transmission power value.

Optionally, the transceiver unit 840 is further configured to: adjust the first transmission power value or the second transmission power value according to a first step, in a case that a difference between the received power value of the echo signal and the first target received power value is within a first numerical range.

Optionally, the first numerical range is configured by a network device side; and the first step is a maximum or a minimum within the first numerical range.

It should be noted that the division of units in the embodiments of the present disclosure is illustrative, and is only a logical function division, and there may be another division manner in actual implementation. In addition, the functional units in various embodiments of the present disclosure may be integrated into one processing unit, or each unit may exist separately physically, or two or more units may be integrated into one unit. The above-mentioned integrated units may be implemented in the form of hardware or in the form of software functional units.

If the integrated unit is implemented in the form of a software function unit and sold or used as an independent product, it can be stored in a processor-readable storage medium. Based on such an understanding, essential parts, or parts contributing to the related art, of the technical solution of the present disclosure, or all or a part of the technical solution may be implemented in a form of a software product. The computer software product is stored in a storage medium, and includes several instructions to enable a computer device (which may be a personal computer, a server, or a network device, etc.) or a processor to execute part or all of the steps of the methods described in the various embodiments of the present disclosure. The aforementioned storage media include: universal serial bus (USB) flash drive, removable hard disk, read-only memory (ROM), random access memory (RAM), magnetic disk, optical disc or other media that can store program codes.

It should be noted that the above terminal provided in the embodiment of the present disclosure can implement all method steps implemented in the above method embodiments, and can achieve the same technical effects. Therefore, the description and the beneficial effect of this embedment that are the same as the method embodiments will not be introduced here in detail.

An embodiment of the present disclosure further provides a processor readable storage medium, where the processor readable storage medium stores a computer program. The computer program is used for causing the processor to execute the above information processing method, and can achieve the same technical effect. Therefore, the description and the beneficial effect of this embedment that are the same as the method embodiments will not be introduced here in detail.

The processor readable storage medium may be any available medium or data storage device that can be accessed by the processor, including but not limited to magnetic storage (such as floppy disk, hard disk, magnetic tape, magneto-optical disk (MO)), optical storage (such as compact disc (CD), digital versatile disc (DVD), blue-ray disc (BD), high-definition versatile disc (HVD)), and semiconductor memory (such as ROM, erasable programmable ROM (EPROM), electrically erasable programmable ROM (EEPROM), non-volatile memory (NAND FLASH), solid-state drive (SSD)), etc.

Those skilled in the art should appreciate that the embodiments of the present disclosure may be provided as a method, a system, or a computer program product. Therefore, the present disclosure may take the form of complete hardware embodiments, complete software embodiments, or embodiments combining software and hardware. Moreover, the present disclosure may take the form of a computer program product implemented on one or more computer usable storage media (including but not limited to magnetic disk storage, optical storage, etc.) including a computer usable program code.

The present disclosure is described with reference to the flow chart and/or the block diagram of the method, device (system), and computer program product according to the embodiments of the present disclosure. It should be appreciated that each of processes and/or blocks in a flow chart and/or block diagram, and a combination of the processes and/or blocks in the flow chart and/or block diagram may be implemented by computer executable instructions. These computer executable instructions may be provided to a processor of a general-purpose computer, a specialized computer, an embedded processing device, or other programmable data processing devices to generate a machine, such that the instructions, which are executed via the processor of the computer or other programmable data processing terminal device, create means for implementing the functions specified in the flow diagram flow or flows and/or block diagram block or blocks.

These processor executable instructions may also be stored in processor-readable memory that may guide computers or other programmable data processing devices to work in a specific way, causing the instructions stored in the processor readable memory to generate a manufacturing product including instruction devices that implement the functions specified in the flow diagram flow or flows and/or block diagram block or blocks.

These processor executable instructions may also be loaded onto a computer or other programmable data processing device, enabling a series of operational steps to be performed on the computer or other programmable device to generate computer-implemented processing, such that the instructions which are executed on the computer or other programmable terminal device provide steps for implementing the functions specified in the flow diagram flow or flows and/or block diagram block or blocks.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, the determination module may be a separate processing element, or may be integrated into a certain chip of the above device, or, may be stored in the memory of the above device in the form of program code which is called and executed by a certain processing element of the above device to perform the functions of the determination module. Other modules have similar implementations. In addition, all or part of these modules may be integrated together, and may be implemented independently. The processing element mentioned here may be an integrated circuit with signal processing capability. In the implementation process, the various steps of the above method or the above various modules may be implemented by an integrated logic circuit in hardware form in elements of a processor or instructions in the form of software.

Apparently, a person of ordinary skills in the art can make various modifications and variations to the present disclosure without departing from the spirit and scope of the present disclosure. In this way, if these modifications and variations of the present disclosure fall within the scope of the claims and their equivalent technologies, the present disclosure also intends to include these modifications and variations.

## Claims

1. A signal processing method, comprising:

   determining, by a terminal, a first target received power value of a sensing signal;
   determining, by the terminal, a first transmission power value of the sensing signal based on the first target received power value;
   determining, by the terminal, a first radio resource based on the first transmission power value; and
   transmitting and/or receiving, by the terminal, the sensing signal on the first radio resource.

2. The signal processing method according to claim 1, wherein the first target received power value is an expected target power value for receiving the sensing signal; and the first target received power value is configured by a network device side or defined by a protocol.

3. The signal processing method according to claim 1 or 2, wherein the determining, by the terminal, the first transmission power value of the sensing signal based on the first target received power value comprises:

   determining, by the terminal, the first transmission power value based on the first target received power value and a first set, wherein the first set at least comprises a path loss value of a first path and a first parameter value related to a frequency-domain resource occupied by the sensing signal; or
   determining, by the terminal, the first transmission power value based on the first target received power value and a second set, wherein the second set at least comprises: a path loss value of a first path,
   wherein the first path is a path from a transmitter for the sensing signal to a first signal receiver, and the first signal receiver is an expected receiver for the sensing signal.

4. The signal processing method according to claim 3, wherein the path loss value of the first path is less than or equal to a preset path loss value, and the preset path loss value is determined at least by a maximum sensing distance supported by a sensing service, a radar cross section (RCS), and a transmission frequency band of the sensing signal.

5. The signal processing method according to claim 1, wherein the determining, by the terminal, the first radio resource based on the first transmission power value comprises:

   determining, by the terminal, a second target received power value of the sensing signal;

determining, by the terminal, a second transmission power value of the sensing signal based on the second target received power value; and

determining, by the terminal, the first radio resource based on a magnitude relationship between the first transmission power value and the second transmission power value.

6. The signal processing method according to claim 5, wherein the second target received power value is a power threshold at which the sensing signal causes interference; and the second target received power value is configured by a network device side or defined by a protocol.

7. The signal processing method according to claim 5 or 6, wherein the determining, by the terminal, the second transmission power value of the sensing signal based on the second target received power value comprises:

determining, by the terminal, the second transmission power value based on the second target received power value and a third set, wherein the third set at least comprises a path loss value of a second path and a first parameter value related to a frequency-domain resource occupied by the sensing signal; or

determining, by the terminal, the second transmission power value based on the second target received power value and a fourth set, wherein the fourth set at least comprises a path loss value of a second path, the first parameter value, and a first gain value; or

determining, by the terminal, the second transmission power value based on the second target received power value and a fifth set, wherein the fifth set at least comprises the path loss value of the second path,

wherein the second path is a path from a transmitter for the sensing signal to a second signal receiver, and the second signal receiver is a receiver interfered by the sensing signal, and the first gain value is a gain value of a difference between a beam direction of a signal received by the terminal from the second signal receiver and a beam direction of the sensing signal received by the terminal.

8. The signal processing method according to claim 7, wherein the path loss value of the second path is determined by a first reference signal, and the first reference signal comprises at least one of the following:

a reference signal configured for a sensing service;
a reference signal used for determining a transmission power of a physical uplink control channel (PUCCH);
a reference signal used for determining a transmission power of a physical uplink shared channel (PUSCH); or
a synchronization signal block used for obtaining a master information block (MIB).

9. The signal processing method according to claim 7, wherein the first gain value is determined by a formula:

$g(\theta_d) = min\left\{12\left(\frac{\theta_d}{\theta_{XdB}}\right), G_m\right\}$ , wherein $g(\theta_d)$ is the first gain value, $\theta_{XdB}$ is an angle value corresponding to a gain attenuation of XdB, $G_m$ is a reference gain value, and $\theta_d$ is a difference between a beam direction of the signal received by the terminal from the second signal receiver and a beam direction of the sensing signal received by the terminal.

10. The signal processing method according to claim 3 or 7, wherein the first parameter value is determined by a quantity of resource blocks (RBs) occupied by the sensing signal in a frequency domain; or
the first parameter value is determined by the quantity of resource units (REs) occupied by the sensing signal in a frequency domain.

11. The signal processing method according to claim 10, wherein the first parameter value being determined by the quantity of resource blocks (RBs) occupied by the sensing signal in the frequency domain comprises:

determining the first parameter value by a formula: $f(M_{RB}^{SS}) = 10\, log_2(2^\mu * M_{RB}^{SS})$ , wherein $f(M_{RB}^{SS})$ is

the first parameter value, $\mu$ is a subcarrier spacing configuration parameter, and $M_{RB}^{SS}$ is the quantity of the RBs occupied by the sensing signal in the frequency domain.

12. The signal processing method according to claim 10, wherein the first parameter value being determined by the quantity of resource units (RE) occupied by the sensing signal in the frequency domain comprises:

determining the first parameter value by a formula: $f(M_{RE}^{SS}) = 10\, log_2(2^\mu * \lceil M_{RE}^{SS}/12\rceil)$ , wherein

$f\left(M_{RE}^{SS}\right)$ is the first parameter value, $\mu$ is the subcarrier spacing configuration parameter, and $M_{RE}^{SS}$ is the quantity of the REs occupied by the sensing signal in the frequency domain.

13. The signal processing method according to claim 5, wherein the determining, by the terminal, the first radio resource based on the magnitude relationship between the first transmission power value and the second transmission power value comprises:

determining, by the terminal, a radio resource obtaining mode based on the magnitude relationship between the first transmission power value and the second transmission power value; and
determining, by the terminal, the first radio resource based on the radio resource obtaining mode.

14. The signal processing method according to claim 13, wherein the determining, by the terminal, the radio resource obtaining mode based on the magnitude relationship between the first transmission power value and the second transmission power value comprises:

in a case where the first transmission power value is greater than or equal to the second transmission power value, determining, by the terminal, the radio resource obtaining mode as a first obtaining mode, wherein the first obtaining mode is that the network device indicates the first radio resource; and/or,
in a case where the first transmission power value is less than the second transmission power value, determining, by the terminal, the radio resource obtaining mode as a second obtaining mode, wherein second obtaining mode is that the terminal independently determines the first radio resource.

15. The signal processing method according to claim 5, wherein the transmitting, by the terminal, the sensing signal on the first radio resource comprises:

transmitting, by the terminal, the sensing signal on the first radio resource at the first transmission power value or the second transmission power value;
receiving, by the terminal, an echo signal reflected by the sensing signal;
adjusting, by the terminal, the first transmission power value or the second transmission power value based on a received power value of the echo signal; and
transmitting, by the terminal, the sensing signal on the first radio resource at the adjusted first transmission power value or the adjusted second transmission power value.

16. The signal processing method according to claim 15, wherein the adjusting, by the terminal, the first transmission power value or the second transmission power value based on the received power value of the echo signal comprises:
adjusting, by the terminal, the first transmission power value or the second transmission power value according to a first step, in a case that a difference between the received power value of the echo signal and the first target received power value is within a first numerical range.

17. The signal processing method according to claim 16, wherein the first numerical range is configured by a network device side; and the first step is a maximum or a minimum within the first numerical range.

18. A signal processing apparatus, comprising a memory, a transceiver, and a processor, wherein the memory is configured to store a computer program; the transceiver is configured to transmit and receive data under the control of the processor; and the processor is configured to read the computer program from the memory and perform the following operations:

determining a first target received power value of a sensing signal;
determining a first transmission power value of the sensing signal based on the first target received power value;
determining a first radio resource based on the first transmission power value; and
transmitting and/or receiving the sensing signal on the first radio resource.

19. The signal processing apparatus according to claim 18, wherein the first target received power value is an expected target power value for receiving the sensing signal; and the first target received power value is configured by a network device side or defined by a protocol.

20. The signal processing apparatus according to claim 18 or 19, wherein the processor is configured to read the computer program in the memory and perform the following operations:

determining the first transmission power value based on the first target received power value and a first set, wherein the first set at least comprises a path loss value of a first path and a first parameter value related to a frequency-domain resource occupied by the sensing signal; or
determining the first transmission power value based on the first target received power value and a second set, wherein the second set at least comprises: a path loss value of a first path,
wherein the first path is a path from a transmitter for the sensing signal to a first signal receiver, and the first signal receiver is an expected receiver for the sensing signal.

21. The signal processing apparatus according to claim 20, wherein the path loss value of the first path is less than or equal to a preset path loss value, and the preset path loss value is determined at least by a maximum sensing distance supported by a sensing service, a radar cross section (RCS), and a transmission frequency band of the sensing signal.

22. The signal processing apparatus according to claim 18, wherein the processor is configured to read the computer program from the memory and perform the following operations:

determining a second target received power value of the sensing signal;
determining a second transmission power value of the sensing signal based on the second target received power value; and
determining the first radio resource based on a magnitude relationship between the first transmission power value and the second transmission power value.

23. The signal processing apparatus according to claim 22, wherein the second target received power value is a power threshold at which the sensing signal causes interference; and the second target received power value is configured by a network device side or defined by a protocol.

24. The signal processing apparatus according to claim 22 or 23, wherein the processor is configured to read the computer program in the memory and perform the following operations:

determining the second transmission power value based on the second target received power value and a third set, wherein the third set at least comprises a path loss value of a second path and a first parameter value related to a frequency-domain resource occupied by the sensing signal; or
determining the second transmission power value based on the second target received power value and a fourth set, wherein the fourth set at least comprises a path loss value of a second path, the first parameter value, and a first gain value; or
determining the second transmission power value based on the second target received power value and a fifth set, wherein the fifth set at least comprises the path loss value of the second path,
wherein the second path is a path from a transmitter for the sensing signal to a second signal receiver, and the second signal receiver is a receiver interfered by the sensing signal, and the first gain value is a gain value of a difference between a beam direction of a signal received by the terminal from a network device and a beam direction of the sensing signal received by the terminal.

25. The signal processing apparatus according to claim 24, wherein the path loss value of the second path is determined by a first reference signal, and the first reference signal comprises at least one of the following:

a reference signal configured for a sensing service;
a reference signal used for determining a transmission power of a physical uplink control channel (PUCCH);
a reference signal used for determining a transmission power of a physical uplink shared channel (PUSCH); or
a synchronization signal block used for obtaining a master information block (MIB).

26. The signal processing apparatus according to claim 24, wherein the first gain value is determined by a formula:

$$g(\theta_d) = min\left\{12\left(\frac{\theta_d}{\theta_{XdB}}\right), G_m\right\}$$, wherein $g(\theta_d)$ is the first gain value, $\theta_{XdB}$ is an angle value corresponding to a gain attenuation of XdB, $G_m$ is a reference gain value, and $\theta_d$ is a difference between a beam direction of the signal received by the terminal from the network device and a beam direction of the sensing signal received by the terminal.

**27.** The signal processing apparatus according to claim 20 or 24, wherein the first parameter value is determined by a quantity of resource blocks (RBs) occupied by the sensing signal in the frequency domain; or
the first parameter value is determined by the quantity of resource units (REs) occupied by the sensing signal in the frequency domain.

**28.** The signal processing apparatus according to claim 27, wherein the first parameter value being determined by the quantity of resource blocks (RBs) occupied by the sensing signal in the frequency domain comprises:

determining the first parameter value by a formula: $f(M_{RB}^{SS}) = 10 \, log_2(2^{\mu} * M_{RB}^{SS})$ , wherein $f(M_{RB}^{SS})$ is

the first parameter value, $\mu$ is a subcarrier spacing configuration parameter, and $M_{RB}^{SS}$ is the quantity of the RBs occupied by the sensing signal in the frequency domain.

**29.** The signal processing apparatus according to claim 27, wherein the first parameter value being determined by the quantity of resource units (RE) occupied by the sensing signal in the frequency domain comprises:

determining the first parameter value by a formula: $f(M_{RB}^{SS}) = 10 \, log_2(2^{\mu} * M_{RB}^{SS})$ , wherein $f(M_{RB}^{SS})$ is

the first parameter value, $\mu$ is a subcarrier spacing configuration parameter, and $M_{RB}^{SS}$ is the quantity of the RBs occupied by the sensing signal in the frequency domain.

**30.** The signal processing apparatus according to claim 22, wherein the processor is configured to read the computer program from the memory and perform the following operations:

determining a radio resource obtaining mode based on the magnitude relationship between the first transmission power value and the second transmission power value; and
determining the first radio resource based on the radio resource obtaining mode.

**31.** The signal processing apparatus according to claim 30, wherein the processor is configured to read the computer program from the memory and perform the following operations:

in a case where the first transmission power value is greater than or equal to the second transmission power value, determining the radio resource obtaining mode as a first obtaining mode, wherein the first obtaining mode is that the network device indicates the first radio resource; and/or,
in a case where the first transmission power value is less than the second transmission power value, determining the radio resource obtaining mode as a second obtaining mode, wherein second obtaining mode is that the terminal independently determines the first radio resource.

**32.** The signal processing apparatus according to claim 22, wherein the processor is configured to read the computer program from the memory and perform the following operations:

transmitting the sensing signal on the first radio resource at the first transmission power value or the second transmission power value;
receiving an echo signal reflected by the sensing signal;
adjusting the first transmission power value or the second transmission power value based on a received power value of the echo signal; and
transmitting the sensing signal on the first radio resource at the adjusted first transmission power value or the adjusted second transmission power value.

**33.** The signal processing apparatus according to claim 32, wherein the processor is configured to read the computer program from the memory and perform the following operations:
adjusting the first transmission power value or the second transmission power value according to a first step, in a case that a difference between the received power value of the echo signal and the first target received power value is within a first numerical range.

**34.** The signal processing apparatus according to claim 33, wherein the first numerical range is configured by a network device side; and the first step is a maximum or a minimum within the first numerical range.

**35.** A terminal, comprising:

a first processing unit, configured to determine a first target received power value of a sensing signal;
a second processing unit, configured to determine a first transmission power value of the sensing signal based on the first target received power value;
a third processing unit, configured to determine a first radio resource based on the first transmission power value; and
a transceiver unit, configured to transmit and/or receive the sensing signal on the first radio resource.

36. The terminal according to claim 35, wherein the first target received power value is an expected target power value for receiving the sensing signal; and the first target received power value is configured by a network device side or defined by a protocol.

37. The terminal according to claim 35 or 36, wherein the second processing unit is further configured to:

determine the first transmission power value based on the first target received power value and a first set, wherein the first set at least comprises a path loss value of a first path and a first parameter value related to a frequency-domain resource occupied by the sensing signal; or
determine the first transmission power value based on the first target received power value and a second set, wherein the second set at least comprises: a path loss value of a first path,
wherein the first path is a path from a transmitter for the sensing signal to a first signal receiver, and the first signal receiver is an expected receiver for the sensing signal.

38. The terminal according to claim 37, wherein the path loss value of the first path is less than or equal to a preset path loss value; and the preset path loss value is determined at least by a maximum sensing distance supported by a sensing service, a radar cross section (RCS), and a transmission frequency band of the sensing signal.

39. The terminal according to claim 35, wherein the third processing unit is further configured to:

determine a second target received power value of the sensing signal;
determine a second transmission power value of the sensing signal based on the second target received power value; and
determine the first radio resource based on a magnitude relationship between the first transmission power value and the second transmission power value.

40. The terminal according to claim 39, wherein the second target received power value is a power threshold at which the sensing signal causes interference; and the second target received power value is configured by a network device side or defined by a protocol.

41. The terminal according to claim 39 or 40, wherein the third processing unit is further configured to:

determine the second transmission power value based on the second target received power value and a third set, wherein the third set at least comprises a path loss value of a second path and a first parameter value related to a frequency-domain resource occupied by the sensing signal; or
determine the second transmission power value based on the second target received power value and a fourth set, wherein the fourth set at least comprises a path loss value of a second path, the first parameter value, and a first gain value; or
determine the second transmission power value based on the second target received power value and a fifth set, wherein the fifth set at least comprises the path loss value of the second path,
wherein the second path is a path from a transmitter for the sensing signal to a second signal receiver, and the second signal receiver is a receiver interfered by the sensing signal, and the first gain value is a gain value of a difference between a beam direction of a signal received by the terminal from the second signal receiver and a beam direction of the sensing signal received by the terminal.

42. The terminal according to claim 41, wherein the path loss value of the second path is determined by a first reference signal, and the first reference signal comprises at least one of the following:

a reference signal configured for a sensing service;
a reference signal used for determining a transmission power of a physical uplink control channel (PUCCH);
a reference signal used for determining a transmission power of a physical uplink shared channel (PUSCH); or

a synchronization signal block used for obtaining a master information block (MIB).

43. The terminal according to claim 41, wherein the first gain value is determined by a formula:

$$g(\theta_d) = min\left\{12\left(\frac{\theta_d}{\theta_{XdB}}\right), G_m\right\}$$, wherein $g(\theta_d)$ is the first gain value, $\theta_{XdB}$ is an angle value corresponding to a gain attenuation of XdB, $G_m$ is a reference gain value, and $\theta_d$ is a difference between a beam direction of the signal received by the terminal from the second signal receiver and a beam direction of the sensing signal received by the terminal.

44. The terminal according to claim 37 or 41, wherein the first parameter value is determined by a quantity of resource blocks (RBs) occupied by the sensing signal in the frequency domain; or
the first parameter value is determined by the quantity of resource units (REs) occupied by the sensing signal in the frequency domain.

45. The terminal according to claim 44, wherein the first parameter value being determined by the quantity of resource blocks (RBs) occupied by the sensing signal in the frequency domain comprises:

determining the first parameter value by a formula: $f(M_{RB}^{SS}) = 10\,log_2(2^\mu * M_{RB}^{SS})$, wherein $f(M_{RB}^{SS})$ is the first parameter value, $\mu$ is a subcarrier spacing configuration parameter, and $M_{RB}^{SS}$ is the quantity of the RBs occupied by the sensing signal in the frequency domain.

46. The terminal according to claim 44, wherein the first parameter value being determined by the quantity of resource units (RE) occupied by the sensing signal in the frequency domain comprises:

determining the first parameter value by a formula: $f(M_{RE}^{SS}) = 10\,log_2(2^\mu * \lceil M_{RE}^{SS}/12\rceil)$, wherein $f(M_{RE}^{SS})$ is the first parameter value, $\mu$ is the subcarrier spacing configuration parameter, and $M_{RE}^{SS}$ is the quantity of the REs occupied by the sensing signal in the frequency domain.

47. The terminal according to claim 39, wherein the third processing unit is further configured to:

determine a radio resource obtaining mode based on the magnitude relationship between the first transmission power value and the second transmission power value; and
determine the first radio resource based on the radio resource obtaining mode.

48. The terminal according to claim 47, wherein the third processing unit is further configured to:

in a case where the first transmission power value is greater than or equal to the second transmission power value, determine the radio resource obtaining mode as a first obtaining mode, wherein the first obtaining mode is that the network device indicates the first radio resource; and/or,
in a case where the first transmission power value is less than the second transmission power value, determine the radio resource obtaining mode as a second obtaining mode, wherein second obtaining mode is that the terminal independently determines the first radio resource.

49. The terminal according to claim 39, wherein the transceiver unit is further configured to:

transmit the sensing signal on the first radio resource at the first transmission power value or the second transmission power value;
receive an echo signal reflected by the sensing signal;
adjust the first transmission power value or the second transmission power value based on a received power value of the echo signal; and
transmit the sensing signal on the first radio resource at the adjusted first transmission power value or the adjusted second transmission power value.

50. The terminal according to claim 49, wherein the transceiver unit is further configured to: adjust the first transmission power value or the second transmission power value according to a first step, in a case that a difference between the received power value of the echo signal and the first target received power value is within a first numerical range.

51. The terminal according to claim 50, wherein the first numerical range is configured by a network device side; and the first step is a maximum or a minimum within the first numerical range.

52. A processor readable storage medium, wherein the processor-readable storage medium stores a computer program, and the computer program is configured to cause the processor to execute steps of the signal processing method according to any one of claims 1 to 17.

FIG. 1a

FIG. 1b

FIG. 1c

FIG. 1d

FIG. 1e

FIG. 1f

FIG. 1g

sensing
pluse(transmit)

transmit
power P_T

interference
minimize (full-
duplex)

sensing pluse
(receive)

received
power P_R

sensing pluse
(reflect)

FIG. 2

determining, by a terminal, a first target received power value of
a sensing signal

31

determining, by the terminal, a first transmission power value of
the sensing signal based on the first target received power value

32

determining, by the terminal, a first radio resource based on the
first transmission power value

33

transmitting and/or receiving, by the terminal, the sensing signal
on the first radio resource

34

FIG. 3

FIG. 4

FIG. 5a

FIG. 5b

setting an initial transmission power P_T=P_init

↓

transmitting a sensing signal

↓

receiving a reflected signal and calculating P_R

↓

whether P_R>P0_target_UE+delta1 —— Y —→ P_T=P_T-delta1

N

↓

whether P_R<P0_target_UE-delta2 —— Y —→ P_T=P_T+delta2

N

↓

end

FIG. 6

processor — 73

memory — 71

bus interface

transceiver — 72

user interface — 74

FIG. 7

first processing unit — 810

second processing unit — 820

third processing unit — 830

transceiver unit — 840

800

FIG. 8

## INTERNATIONAL SEARCH REPORT

| International application No. |
|---|
| **PCT/CN2024/095696** |

**A.  CLASSIFICATION OF SUBJECT MATTER**

H04W 24/08(2009.01)i

According to International Patent Classification (IPC) or to both national classification and IPC

**B.  FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT, ENTXTC, DWPI, CNKI, VEN, ENTXT, 3GPP: 感知, 信号, 功率, 接收, 发送, 资源, 终端, 基站, sensing, signal, power, receive, transmit, resource, UE, gNB, BS, eNB

**C.  DOCUMENTS CONSIDERED TO BE RELEVANT**

| Category* | Citation of document, with indication, where appropriate, of the relevant passages | Relevant to claim No. |
|---|---|---|
| A | WO 2023016569 A1 (HUAWEI TECHNOLOGIES CO., LTD.) 16 February 2023 (2023-02-16)<br>  description, page 1, line 20 to page 38, line 23 | 1-52 |
| A | WO 2023030447 A1 (VIVO MOBILE COMMUNICATION CO., LTD.) 09 March 2023 (2023-03-09)<br>  entire document | 1-52 |
| A | CN 115696423 A (HUAWEI TECHNOLOGIES CO., LTD.) 03 February 2023 (2023-02-03)<br>  entire document | 1-52 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **16 July 2024** | **23 July 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2024/095696**

| Patent document cited in search report | | | Publication date (day/month/year) | Patent family member(s) | | | Publication date (day/month/year) |
|---|---|---|---|---|---|---|---|
| WO | 2023016569 | A1 | 16 February 2023 | EP | 4380249 | A1 | 05 June 2024 |
| WO | 2023030447 | A1 | 09 March 2023 | US | 2024214866 | A1 | 27 June 2024 |
| CN | 115696423 | A | 03 February 2023 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310716651 X